(19) **Europäisches Patentamt European Patent Office Office européen des brevets**

(11) **EP 3 468 298 B1**

(12) # EUROPEAN PATENT SPECIFICATION

(45) Date of publication and mention of the grant of the patent:
**29.09.2021 Bulletin 2021/39**

(21) Application number: **17819140.9**

(22) Date of filing: **20.06.2017**

(51) Int Cl.:
**H04W 88/08** *(2009.01)* **H04W 92/00** *(2009.01)*

(86) International application number:
**PCT/CN2017/089245**

(87) International publication number:
**WO 2018/001143 (04.01.2018 Gazette 2018/01)**

(54) **DATA TRANSMISSION METHOD AND DEVICE AND PHOTOELECTRIC CONVERSION DEVICE AND SYSTEM**

DATENÜBERTRAGUNGSVERFAHREN UND -VORRICHTUNG SOWIE VORRICHTUNG UND SYSTEM ZUR PHOTOELEKTRISCHEN UMWANDLUNG

PROCÉDÉ ET DISPOSITIF DE TRANSMISSION DE DONNÉES ET DISPOSITIF ET SYSTÈME DE CONVERSION PHOTOÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2016 CN 201610488503**

(43) Date of publication of application:
**10.04.2019 Bulletin 2019/15**

(73) Proprietor: **ZTE Corporation Shenzhen, Guangdong 518057 (CN)**

(72) Inventors:
• **ZHOU, Wenbin Shenzhen Guangdong 518057 (CN)**
• **LIU, Kai Shenzhen Guangdong 518057 (CN)**
• **ZHANG, Diqiang Shenzhen Guangdong 518057 (CN)**
• **QIU, Mingqing Shenzhen Guangdong 518057 (CN)**

(74) Representative: **Novagraaf Technologies Bâtiment O2 2, rue Sarah Bernhardt CS90017 92665 Asnières-sur-Seine Cedex (FR)**

(56) References cited:
**EP-A1- 1 744 572 EP-A1- 2 908 600 WO-A1-2008/071131 WO-A1-2015/092677 CN-A- 101 247 574 CN-A- 101 248 689 CN-A- 101 931 454 US-A1- 2016 143 016**

• **SHIBATA NAOTAKA ET AL: "Performance evaluation of mobile front-haul employing ethernet- based TDM-PON with IQ data compression [Invited]", JOURNAL OF OPTICAL COMMUNICATIONS AND NETWORKING, INSTITUTE OF ELECTRICAL AND ELECTRONICS ENGINEERS, US, vol. 7, no. 11, 1 November 2015 (2015-11-01), XP011590784, ISSN: 1943-0620, DOI: 10.1364/JOCN.7.000B16 [retrieved on 2015-11-16]**

## Description

## Technical Field

The present invention relates to the field of communication, and in an embodiment to a data transmission method and device and a photoelectric conversion device and system.

## Background

Along with the increase of demands of users for data, applications to indoor scenarios increase and outdoor macro stations may not solve problems about indoor coverage well. In order to improve a user experience of an indoor scenario better, indoor distributed system emerges. A conventional macro Radio Remote Unit (RRU) is connected with a Building Baseband Unit (BBU) in an optical fiber manner for communication. However, during indoor coverage, there are relatively few optical fiber resources and relatively more Ethernet cable resources. For maximally saving resources and realizing a better layout, a cable-transmission-based RRU is adopted for indoor coverage. The RRU adopts an Ethernet interface cable for communication and may not directly be interconnected with a Common Public Radio Interface (CPRI) of a BBU.

For the problem of incapability in synchronously transmitting CPRI frame data and Ethernet frame data in a related art, there is yet no effective solution.

Patent EP 2908600 and SHIBATA NAOTAKA "Performance evaluation of mobile front-haul employing Ethernet-based TDM-PON with IQ data compression", journal of optical communications and networking provide respective technical solutions; however, the above mentioned problem still remains unsolved.

## Summary

Embodiments of the present invention provide data transmission methods and corresponding photoelectric conversion devices, so as at least to solve the problem of incapability in synchronously transmitting CPRI frame data and Ethernet frame data in the related art.

The present invention is defined by the appended independent claims, the dependent claims constitute embodiments of the invention

The following examples are provided for illustrative purposes.

According to an example, a data transmission method is provided, which may include that: data to be transmitted is extracted from a received CPRI frame; the data to be transmitted is inserted into an Ethernet frame, a period of the Ethernet frame being the same as a period of the CPRI frame; and the Ethernet frame is sent.

In an example, the operation that the data to be transmitted is inserted into the Ethernet frame may include that: an effective data volume averagely borne in each Ethernet basic frame in the Ethernet frame is acquired; a second number of CPRI basic frames averagely borne in each Ethernet basic frame in the Ethernet frame is determined according to a first number of CPRI basic frames in the CPRI frame and a format of the Ethernet frame; a data volume of each CPRI basic frame averagely borne in each Ethernet basic frame is determined according to the effective data volume and the second number; the data to be transmitted is allocated to the Ethernet basic frames according to the data volume of each CPRI basic frame averagely borne in each Ethernet basic frame and the format of the Ethernet frame; and the allocated data to be transmitted is correspondingly inserted into the Ethernet basic frames.

In an example, the data volume of each CPRI basic frame averagely borne in each Ethernet basic frame is determined according to the following formulae:

$$D = \frac{Y}{C}$$

$C = R / (N \times M)$ and , where C may represent the second number, R may represent the first number, N may represent a number of slot frames in the Ethernet frame, M may represent a number of Ethernet basic frames in each slot frame, Y may represent the effective data volume and D may represent the data volume of each CPRI basic frame averagely borne in each Ethernet basic frame.

In an example, the operation that the data to be transmitted is inserted into the Ethernet frame may include that: a data volume borne in each Ethernet frame is determined according to a data transmission rate of an interface transmitting the Ethernet frame; whether the data volume borne in each Ethernet frame is smaller than a data volume of the data to be transmitted or not is judged; under the condition of judging that the data volume borne in each Ethernet frame is smaller than the data volume of the data to be transmitted, the data to be transmitted is inserted into multiple Ethernet frames, or data in a preset data volume is screened from the data to be transmitted, the data in the preset data volume is inserted into an Ethernet frame and the other data, except the screened data in the preset data volume, in the data to be transmitted is discarded; and/or, under the condition of judging that the data volume borne in each Ethernet frame is not smaller than the data volume of the data to be transmitted, the data to be transmitted is inserted into an Ethernet frame.

In an example, the data volume borne in the Ethernet frame is determined according to the following formula:

$$X = \frac{P \times T}{8}$$

, where P may represent the data transmission rate of the interface transmitting the Ethernet frame and T may represent the period of the Ethernet frame.

In an example, before the operation that the data to be transmitted is inserted into the Ethernet frame, the method may further include that: whether to compress the data to be transmitted or not is judged; under the condition of judging to compress the data to be transmitted, the data to be transmitted is compressed according to a preset compression algorithm and the compressed data to be transmitted is determined as the data to be transmitted which is to be inserted into the Ethernet frame; or, under the condition of judging not to compress the data to be transmitted, the data to be transmitted is transparently transmitted.

In an example, the Ethernet frame may include a data transmission region and the data transmission region may be configured to transmit the data to be transmitted.

In an example, the Ethernet frame may further include a control information transmission region and the control information transmission region may be configured to transmit control information of the Ethernet frame.

According to another example, a data transmission method is provided, which may include that: data to be transmitted is extracted from a received Ethernet frame, a period of the Ethernet frame being the same as a period of a CPRI frame; the data to be transmitted is inserted into the CPRI frame; and the CPRI frame is sent.

In an example, the operation that the data to be transmitted is extracted from the received Ethernet frame may include that: an effective data volume borne in each Ethernet basic frame in the Ethernet frame is acquired; and data is extracted from each Ethernet basic frame to obtain the data to be transmitted according to a format of the Ethernet frame and the effective data volume borne in each Ethernet basic frame.

In an example, the operation that the data to be transmitted is inserted into the CPRI frame may include that: the data to be transmitted is allocated to CPRI basic frames in the CPRI frame according to a format of the CPRI frame; and the allocated data to be transmitted is correspondingly inserted into the CPRI basic frames.

In an example, the operation that the data to be transmitted is inserted into the CPRI frame may include that: whether a data volume of the data to be transmitted is larger than a data volume borne in each CPRI frame or not is judged; under the condition of judging that the data volume of the data to be transmitted is larger than the data volume borne in each CPRI frame, the data to be transmitted is inserted into multiple CPRI frames, or data in a preset data volume is screened from the data to be transmitted, the data in the preset data volume is inserted into a CPRI frame and the other data, except the screened data in the preset data volume, in the data to be transmitted is discarded; and/or, under the condition of judging that the data volume of the data to be transmitted is not larger than the data volume borne in each CPRI frame, the data to be transmitted is inserted into a CPRI frame.

In an example, before the operation that the data to be transmitted is inserted into the CPRI frame, the method may further include that: whether to decompress the data to be transmitted or not is judged; under the condition of judging to decompress the data to be transmitted, the data to be transmitted is decompressed according to a preset decompression algorithm and the decompressed data to be transmitted is determined as the data to be transmitted which is to be inserted into the CPRI frame; or, under the condition of judging not to decompress the data to be transmitted, the data to be transmitted is transparently transmitted.

According to another example, a data transmission device is provided, which may include: a first extraction module, configured to extract data to be transmitted from a received CPRI frame; a first insertion module, configured to insert the data to be transmitted into an Ethernet frame, a period of the Ethernet frame being the same as a period of the CPRI frame; and a first sending module, configured to send the Ethernet frame.

In an example, the first insertion module may include: a first acquisition unit, configured to acquire an effective data volume averagely borne in each Ethernet basic frame in the Ethernet frame; a first determination unit, configured to determine a second number of CPRI basic frames averagely borne in each Ethernet basic frame in the Ethernet frame is determined according to a first number of CPRI basic frames in the CPRI frame and a format of the Ethernet frame; a second determination unit, configured to determine a data volume of each CPRI basic frame averagely borne in each Ethernet basic frame according to the effective data volume and the second number; a first allocation unit, configured to allocate the data to be transmitted to the Ethernet basic frames according to the data volume of each CPRI basic frame averagely borne in each Ethernet basic frame and the format of the Ethernet frame; and a first insertion unit, configured to correspondingly insert the allocated data to be transmitted into the Ethernet basic frames.

In an example, the first insertion module may include: a third determination unit, configured to determine a data volume borne in each Ethernet frame according to a data transmission rate of an interface transmitting the Ethernet frame; a first judgment unit, configured to judge whether the data volume borne in each Ethernet frame is smaller than a data volume of the data to be transmitted or not; a first processing unit, configured to, under the condition of judging that the data volume borne in each Ethernet frame is smaller than the data volume of the data to be transmitted, insert the data to be transmitted into multiple Ethernet frames, or screen data in a preset data volume from the data to be transmitted, insert the data in the preset data volume into an Ethernet frame and discard the other data, except the screened data in the preset data volume, in the data to be transmitted; and/or, a second processing unit, configured to, under the condition of judging that the data volume borne in each Ethernet frame is not smaller than the data volume of the data to be transmitted, insert the data to be transmitted into an Ethernet frame.

In an example, the device may further include: a first judgment module, configured to judge whether to compress the data to be transmitted or not; and a compression module, configured to, under the condition of judging to compress the data to be transmitted, compress the data to be transmitted according to a preset compression algorithm and determine the compressed data to be transmitted as the data to be transmitted which is to be inserted into the Ethernet frame, or, under the condition of judging not to compress the data to be transmitted, transparently transmit the data to be transmitted.

According to another example, a data transmission device is provided, which may include: a second extraction module, configured to extract data to be transmitted from a received Ethernet frame, a period of the Ethernet frame being the same as a period of a CPRI frame; a second insertion module, configured to insert the data to be transmitted into the CPRI frame; and a second sending module, configured to send the CPRI frame.

In an example, the second extraction module may include: a second extraction unit, configured to acquire an effective data volume borne in each Ethernet basic frame in the Ethernet frame; and an extraction unit, configured to extract data from each Ethernet basic frame to obtain the data to be transmitted according to a format of the Ethernet frame and the effective data volume borne in each Ethernet basic frame.

In an example, the second insertion module may include: a second allocation unit, configured to allocate the data to be transmitted to CPRI basic frames in the CPRI frame according to a format of the CPRI frame; and a second insertion unit, configured to correspondingly insert the allocated data to be transmitted into the CPRI basic frames.

In an example, the second insertion module may include: a second judgment unit, configured to judge whether a data volume of the data to be transmitted is larger than a data volume borne in each CPRI frame or not; a third processing unit, configured to, under the condition of judging that the data volume of the data to be transmitted larger than the data volume borne in each CPRI frame, insert the data to be transmitted into multiple CPRI frames, or screen data in a preset data volume from the data to be transmitted, insert the data in the preset data volume into a CPRI frame and discard the other data, except the screened data in the preset data volume, in the data to be transmitted; and/or, a fourth processing unit, configured to, under the condition of judging that the data volume of the data to be transmitted is not larger than the data volume borne in each CPRI frame, insert the data to be transmitted into a CPRI frame.

In an example, the device may further include: a second judgment module, configured to judge whether to decompress the data to be transmitted or not; and a decompression module, configured to, under the condition of judging to decompress the data to be transmitted, decompress the data to be transmitted according to a preset decompression algorithm and determine the decompressed data to be transmitted as the data to be transmitted which is to be inserted into the CPRI frame, or, under the condition of judging not to decompress the data to be transmitted, transparently transmit the data to be transmitted.

According to another example, a photoelectric conversion device is provided, which may include a first processing chip, a first interface and a second interface, wherein the first processing chip may be connected between the first interface and the second interface; the first interface may be configured to receive a CPRI frame; the first processing chip may be configured to extract data to be transmitted from the received CPRI frame and insert the data to be transmitted into an Ethernet frame, a period of the Ethernet frame being the same as a period of the CPRI frame; and the second interface may be configured to send the Ethernet frame.

In an example, the first processing chip may be configured to: acquire an effective data volume averagely borne in each Ethernet basic frame in the Ethernet frame; determine a second number of CPRI basic frames averagely borne in each Ethernet basic frame in the Ethernet frame according to a first number of CPRI basic frames in the CPRI frame and a format of the Ethernet frame; determine a data volume of each CPRI basic frame averagely borne in each Ethernet basic frame according to the effective data volume and the second number; allocate the data to be transmitted to the Ethernet basic frames according to the data volume of each CPRI basic frame averagely borne in each Ethernet basic frame and the format of the Ethernet frame; and correspondingly insert the allocated data to be transmitted into the Ethernet basic frames.

In an example, the first processing chip may be configured to: determine a data volume borne in each Ethernet frame according to a data transmission rate of an interface transmitting the Ethernet frame; judge whether the data volume borne in each Ethernet frame is smaller than a data volume of the data to be transmitted or not; under the condition of judging that the data volume borne in each Ethernet frame is smaller than the data volume of the data to be transmitted, insert the data to be transmitted into multiple Ethernet frames, or screen data in a preset data volume from the data to be transmitted, insert the data in the preset data volume into an Ethernet frame and discard the other data, except the screened data in the preset data volume, in the data to be transmitted; and/or, under the condition of judging that the data volume borne in each Ethernet frame is not smaller than the data volume of the data to be transmitted, insert the data to be transmitted an Ethernet frame.

In an example, the first processing chip may be configured to: before the data to be transmitted is inserted into the Ethernet frame, judge whether to compress the data to be transmitted or not; and under the condition of judging to compress the data to be transmitted, compress the data to be transmitted according to a preset compression algorithm and determine the compressed data to be transmitted as the data to be transmitted which is to be inserted into the Ethernet frame, or, under the condition of judging not to compress the data to be transmitted, transparently transmit the data to be transmitted.

According to another example, a photoelectric conversion device is provided, which may include a second processing chip, a third interface and a fourth interface, wherein the second processing chip may be connected between the third interface and the fourth interface; the third interface may be configured to receive an Ethernet frame; the second processing chip may be configured to extract data to be transmitted from the received Ethernet frame, a period of the Ethernet frame being the same as a period of a CPRI frame and insert the data to be transmitted into the CPRI frame; and the fourth interface may be configured to send the CPRI frame.

In an example, the second processing chip may be configured to: acquire an effective data volume borne in each Ethernet basic frame in the Ethernet frame; and extract data from each Ethernet basic frame to obtain the data to be transmitted according to a format of the Ethernet frame and the effective data volume borne in each Ethernet basic frame.

In an example, the second processing chip may be configured to: allocate the data to be transmitted to CPRI basic frames in the CPRI frame according to a format of the CPRI frame; and correspondingly insert the allocated data to be transmitted into the CPRI basic frames.

In an example, the second processing chip may be configured to: judge whether a data volume of the data to be transmitted is larger than a data volume borne in each CPRI frame or not; under the condition of judging that the data volume of the data to be transmitted larger than the data volume borne in each CPRI frame, insert the data to be transmitted into multiple CPRI frames, or screen data in a preset data volume from the data to be transmitted, insert the data in the preset data volume into a CPRI frame and discard the other data, except the screened data in the preset data volume, in the data to be transmitted; and/or, under the condition of judging that the data volume of the data to be transmitted is not larger than the data volume borne in each CPRI frame, insert the data to be transmitted into a CPRI frame.

In an example, the second processing chip may be configured to: before the data to be transmitted is inserted into the CPRI frame, judge whether to decompress the data to be transmitted or not; and under the condition of judging to decompress the data to be transmitted, decompress the data to be transmitted according to a preset decompression algorithm and determine the decompressed data to be transmitted as the data to be transmitted which is to be inserted into the CPRI frame, or, under the condition of judging not to decompress the data to be transmitted, transparently transmit the data to be transmitted.

According to another example, a photoelectric conversion system is provided, which may include a first device, a photoelectric conversion device and a second device, wherein the photoelectric conversion device may include a processing chip, an optical interface and an electrical interface; the processing chip may be connected between the optical interface and the electrical interface, the optical interface may be connected with the first device and the electrical interface may be connected with the second device; the processing chip may be configured to extract data to be transmitted from a CPRI frame received by the optical interface and insert the data to be transmitted into an Ethernet frame, a period of the Ethernet frame being the same as a period of the CPRI frame, and/or extract data to be transmitted from a Ethernet frame received by the electrical interface, a period of the Ethernet frame being the same as a period of a CPRI frame and insert the data to be transmitted into the CPRI frame; the optical interface may be configured to receive or send the CPRI frame; the electrical interface may be configured to send or receive the Ethernet frame; the first device may be configured to receive the CPRI frame sent by the photoelectric device and acquire the data to be transmitted from the CPRI frame; and the second device may be configured to receive the Ethernet frame sent by the photoelectric conversion device and acquire the data to be transmitted from the Ethernet frame.

In an example, the first device may include a BBU, and the second device may include at least one of one or more RRUs and one or more photoelectric conversion devices; or, the first device may include at least one of one or more RRUs and one or more photoelectric conversion devices, and the second device may include a BBU.

Through the invention, the data to be transmitted is extracted from the received CPRI frame; the data to be transmitted is inserted into the Ethernet frame, the period of the Ethernet frame being the same as the period of the CPRI frame; and the Ethernet frame is sent. In such a manner, the solution is adopted to insert the data to be transmitted into the Ethernet frame of which the period is the same as that of the CPRI frame for transmission. Therefore, synchronous transmission of CPRI frame data and Ethernet frame data is implemented and the problem of incapability in synchronously transmitting the CPRI frame data and the Ethernet frame data in the related art is solved.

According to another example, a computer storage medium is provided, which may store an executable instruction, the executable instruction being configured to execute data transmission methods in the abovementioned examples.

## Brief Description of the Drawings

The drawings described herein are adopted to provide an understanding to the invention and form a part of the application. Schematic examples of the invention and descriptions thereof are adopted to explain the invention and not intended to form improper limits to the invention. In the drawings:

Fig. 1 is a first flowchart of a data transmission method according to an example of the invention;

Fig. 2 is a second flowchart of a data transmission method according to an example of the invention;

Fig. 3 is a first structure block diagram of a data transmission device according to an example;

Fig. 4 is a second structure block diagram of a data transmission device according to an example;

Fig. 5 is a third structure block diagram of a data transmission device according to an example;

Fig. 6 is a fourth structure block diagram of a data transmission device according to an example;

Fig. 7 is a fifth structure block diagram of a data transmission device according to an example;

Fig. 8 is a sixth structure block diagram of a data transmission device according to an example;

Fig. 9 is a seventh structure block diagram of a data transmission device according to an example;

Fig. 10 is an eighth structure block diagram of a data transmission device according to an example;

Fig. 11 is a ninth structure block diagram of a data transmission device according to an example;

Fig. 12 is a flowchart of a data transmission method according to an optional example;

Fig. 13 is a schematic diagram of a frame structure of an Ethernet frame according to an optional example;

Fig. 14 is a first structure block diagram of a data transmission device according to an optional example;

Fig. 15 is a second structure block diagram of a data transmission device according to an implementation example;

Fig. 16 is a third structure block diagram of a data transmission device according to an optional example;

Fig. 17 is a fourth structure block diagram of a data transmission device according to an optional example;

Fig. 18 is a fifth structure block diagram of a data transmission device according to an optional example;

Fig. 19 is a sixth structure block diagram of a data transmission device according to an implementation example;

Fig. 20 is a structure block diagram of a photoelectric conversion device according to an example of the invention;

Fig. 21 is a structure block diagram of another photoelectric conversion device according to an example of the invention; and

Fig. 22 is a structure block diagram of a photoelectric conversion system according to an example.

## Detailed Description of the Embodiments

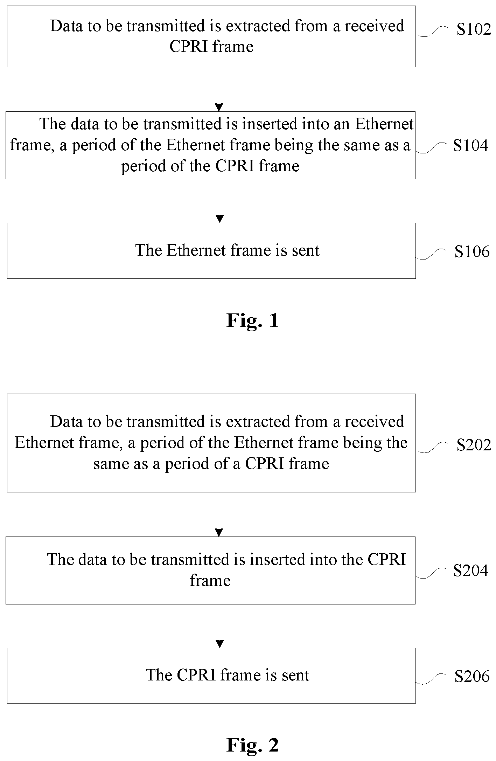

The invention will be described below with reference to figures 1, 2, 20 and 21. The description of the remaining figures relates to subject-matter which is not subject of the claims.

It is to be noted that the embodiments in the application and characteristics in the embodiments may be combined without conflicts.

It is to be noted that terms "first", "second" and the like in the specification, claims and drawings of the invention are adopted not to describe a specific sequence or order but to distinguish similar objects.

Example 1

The example provides a data transmission method. Fig. 1 is a first flowchart of a data transmission method according to an example of the invention. As shown in Fig. 1, the flow includes the following steps.

In S102, data to be transmitted is extracted from a received CPRI frame.

In S104, the data to be transmitted is inserted into an Ethernet frame, a period of the Ethernet frame being the same as a period of the CPRI frame.

In S106, the Ethernet frame is sent.

In an example, the data transmission method may be applied, but not limited, to a scenario of coverage of a communication network, for example, a scenario where an interface transmitting the Ethernet frame is interconnected with an optical interface of a BBU through a cable during indoor coverage of the communication network.

Through the steps, the data to be transmitted is extracted from the received CPRI frame; the data to be transmitted is inserted into the Ethernet frame, the period of the Ethernet frame being the same as the period of the CPRI frame; and the Ethernet frame is sent. In such a manner, the solution is adopted to insert the data to be transmitted into the Ethernet frame of which the period is the same as that of the CPRI frame for transmission. Therefore, synchronous transmission of CPRI frame data and Ethernet frame data is implemented and the problem of incapability in synchronously transmitting the CPRI frame data and the Ethernet frame data in the related art is solved.

In the example, in, but not limited to, a manner of setting packet sequence number control words for Ethernet basic frames, an Ethernet interface receiving the Ethernet frame inserted with the data to be transmitted may parse the packet sequence number control words for the Ethernet basic frames to analyze a frame header position of the Ethernet frame, thereby implementing synchronous transmission of the CPRI frame data and the Ethernet frame data.

In an example, in S104, a data volume of each CPRI basic frame averagely borne in each Ethernet basic frame may be obtained according to an effective data volume averagely borne in each Ethernet basic frame and a number of CPRI basic frames averagely borne in each Ethernet basic frame, then the data to be transmitted is allocated according to the data volume of each CPRI basic frame averagely borne in each Ethernet basic frame and the data to be transmitted is inserted into the Ethernet basic frames according to an allocation result. For example, the effective data volume averagely borne in each Ethernet basic frame in the Ethernet frame is acquired, a second number of CPRI basic frames averagely borne in each Ethernet basic frame in the Ethernet frame is determined according to a first number of CPRI basic frames in the CPRI frame and a format of the Ethernet frame, the data volume of each CPRI basic frame averagely borne in each Ethernet basic frame is determined according to the effective data volume and the second number, the data to be transmitted is allocated to the Ethernet basic frames according to the data volume of each CPRI basic frame averagely borne in each Ethernet basic frame and the format of the Ethernet frame and the allocated data to be transmitted is correspondingly inserted into the Ethernet basic frames.

Through the steps, the data in the CPRI frame may be inserted into the Ethernet frame according to the format of the Ethernet frame and the data volume borne therein, thereby implementing synchronous transmission of the CPRI frame data and the Ethernet frame data.

In an example, the data volume of each CPRI basic frame averagely borne in each Ethernet basic frame may be determined according, but not limited, to the following formulae:

$$C = R / (N \times M),$$

and

$$D = \frac{Y}{C},$$

where C represents the second number, R represents the first number, N represents a number of slot frames in the Ethernet frame, M represents a number of Ethernet basic frames in each slot frame, Y represents the effective data volume and D represents the data volume of each CPRI basic frame averagely borne in each Ethernet basic frame.

In an example, in S104, for synchroously transmitting data contained in the CPRI frame in the Ethernet frame, under the condition, but not limited to, that a data volume bearable for the Ethernet frame is smaller than a data volume of the data to be transmitted, data in a preset data volume is screened from the data to be transmitted as the data to be transmitted which is to be inserted into the Ethernet frame. For example, a data volume borne in each Ethernet frame is determined according to a data transmission rate of the interface transmitting the Ethernet frame; whether the data volume borne in each Ethernet frame is smaller than the data volume of the data to be transmitted or not is judged; under the condition of judging that the data volume borne in each Ethernet frame is smaller than the data volume of the data to be transmitted, the data to be transmitted is inserted into multiple Ethernet frames, or the data in the preset data volume is screened from the data to be transmitted, the data in the preset data volume is inserted into an Ethernet frame and the other data, except the screened data in the preset data volume in the data to be transmitted is discarded; and/or, under the condition of judging that the data volume borne in each Ethernet frame is not smaller than the data volume of the data to be transmitted, the data to be transmitted is inserted into an Ethernet frame.

In an example, the data to be transmitted is inserted into the multiple Ethernet frames in, but not limited to, a routing manner. For example, the data to be transmitted is screened for the multiple Ethernet frames according to preset routing information respectively, the screened data is routed to multiple interfaces configured to transmit the Ethernet frames and the data is correspondingly inserted into the Ethernet frames for transmission. Through the steps, when the data volume of the data to be transmitted is larger than a data volume which may be transmitted an Ethernet frame, the data to be transmitted is routed to the multiple interfaces through a routing mechanism and the data to be transmitted is transmitted through the multiple Ethernet frames. Thus it can be seen that adoption of the solution ensures data transmission synchronism and also ensures integrity of transmitted data.

In an example, the data volume borne in the Ethernet frame may be determined according, but not limited, to the following formula:

$$X = \frac{P \times T}{8},$$

where P represents the data transmission rate of the interface transmitting the Ethernet frame and T represents the period of the Ethernet frame.

In an example, before S104, the data to be transmitted may be compressed to ensure higher data transmission efficiency. For example, whether to compress the data to be transmitted or not is judged; and under the condition of judging to compress the data to be transmitted, the data to be transmitted is compressed according to a preset compression algorithm and the compressed data to be transmitted is determined as the data to be transmitted which is to be inserted into the Ethernet frame.

In an example, under the condition of judging not to compress the data to be transmitted, the data to be transmitted may be inserted into the Ethernet frame in a transparent transmission manner.

In an example, the Ethernet frame may include, but not limited to, a data transmission region and the data transmission region is configured to transmit the data to be transmitted.

In an example, the Ethernet frame may further include, but not limited to, a control information transmission region and the control information transmission region is configured to transmit control information of the Ethernet frame.

Example 2

The example provides a data transmission method. Fig. 2 is a second flowchart of a data transmission method according to an example of the invention. As shown in Fig. 2, the flow includes the following steps.

In S202, data to be transmitted is extracted from a received Ethernet frame, a period of the Ethernet frame being the same as a period of a CPRI frame.

In S204, the data to be transmitted is inserted into the CPRI frame.

In S206, the CPRI frame is sent.

In an example, the data transmission method may be applied, but not limited, to a scenario of coverage of a communication network, for example, a scenario where an interface transmitting the Ethernet frame is interconnected with an optical interface of a BBU through a cable during indoor coverage of the communication network.

Through the steps, the data to be transmitted is extracted from the received Ethernet frame, the period of the Ethernet frame being the same as the period of the CPRI frame; the data to be transmitted is inserted into the CPRI frame; and the CPRI frame is sent. In such a manner, the solution is adopted to insert the data to be transmitted in the received Ethernet frame of which the period is the same as that of the CPRI frame into the CPRI frame for transmission. Therefore, synchronous transmission of CPRI frame data and Ethernet frame data is implemented and the problem of incapability in synchronously transmitting the CPRI frame data and the Ethernet frame data in the related art is solved.

In the example, in, but not limited to, a manner of setting packet sequence number control words for Ethernet basic frames, a frame header position of the Ethernet frame may be analyzed according to parsing over the packet sequence number control words for the Ethernet basic frames after the Ethernet frame inserted with the data to be transmitted is received, thereby implementing synchronous transmission of the CPRI frame data and the Ethernet frame data.

In an example, in S202, the data to be transmitted may be obtained according, but not limited, to a format of the Ethernet frame and an effective data volume borne in each Ethernet basic frame. For example, the effective data volume borne in each Ethernet basic frame in the Ethernet frame is acquired and data is extracted from each Ethernet basic frame to obtain the data to be transmitted according to the format of the Ethernet frame and the effective data volume borne in each Ethernet basic frame.

In an example, in S204, the data to be transmitted may be allocated, but not limited, to CPRI basic frames. For example, the data to be transmitted is allocated to the CPRI basic frames in the CPRI frame according to a format of the CPRI frame and the allocated data to be transmitted is correspondingly inserted into the CPRI basic frames.

In an example, in S204, for achieving higher data transmission efficiency, the data to be transmitted may be screened under the condition that a data volume of the data to be transmitted is larger than a data volume borne in each CPRI frame. For example, whether the data volume of the data to be transmitted is larger than the data volume borne in each CPRI frame or not is judged; under the condition of judging that the data volume of the data to be transmitted is larger than the data volume borne in each CPRI frame, the data to be transmitted is inserted into multiple CPRI frames, or data in a preset data volume is screened from the data to be transmitted, the data in the preset data volume is inserted into a CPRI frame and the other data, except the screened data in the preset data volume, in the data to be transmitted is discarded; and/or, under the condition of judging that the data volume of the data to be transmitted is not larger than the data volume borne in each CPRI frame, the data to be transmitted is inserted into a CPRI frame.

In an example, before S204, the data to be transmitted may, but not limited to, be decompressed. For example, whether to decompress the data to be transmitted or not is judged; under the condition of judging to decompress the data to be transmitted, the data to be transmitted is decompressed according to a preset decompression algorithm and the decompressed data to be transmitted is determined as the data to be transmitted which is to be inserted into the CPRI frame; or, under the condition of judging not to decompress the data to be transmitted, the data to be transmitted is transparently transmitted.

Example 3

The example also provides a data transmission device. The device is configured to implement the abovementioned example and optional implementation modes, and what has been described will not be elaborated. For example, term "module", used below, may be a combination of software and/or hardware capable of realizing a preset function. Although the device described in the following example is preferably implemented with software, implementation with hardware or a combination of the software and the hardware is also possible and conceivable.

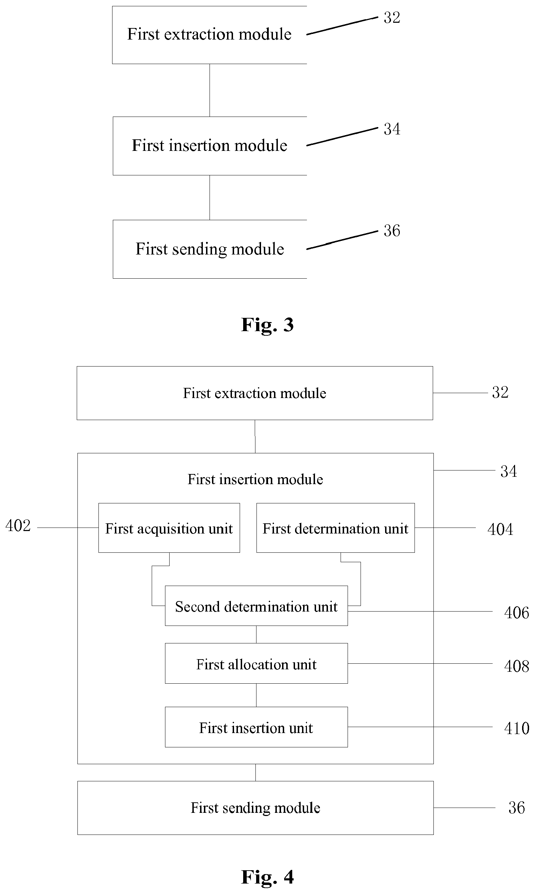

Fig. 3 is a first structure block diagram of a data transmission device according to an example. As shown in Fig. 3, the device includes:

a first extraction module 32, configured to extract data to be transmitted from a received CPRI frame;
a first insertion module 34, coupled to the first extraction module 32 and configured to insert the data to be transmitted into an Ethernet frame, a period of the Ethernet frame being the same as a period of the CPRI frame; and
a first sending module 36, coupled to the first insertion module 34 and configured to send the Ethernet frame.

In an example, the data transmission device may be applied, but not limited, to a scenario of coverage of a communication network, for example, a scenario where an interface transmitting the Ethernet frame is interconnected with an optical interface of a BBU through a cable during indoor coverage of the communication network.

Through the device, the first extraction module extracts the data to be transmitted from the received CPRI frame; the first insertion module inserts the data to be transmitted into the Ethernet frame, the period of the Ethernet frame being the same as the period of the CPRI frame; and the first sending module sends the Ethernet frame. In such a manner, the solution is adopted to insert the data to be transmitted into the Ethernet frame of which the period is the same as that of the CPRI frame for transmission. Therefore, synchronous transmission of CPRI frame data and Ethernet frame data is implemented and the problem of incapability in synchronously transmitting the CPRI frame data and the Ethernet frame data in the related art is solved.

In the example, in, but not limited to, a manner of setting packet sequence number control words for Ethernet basic frames, an Ethernet interface receiving the Ethernet frame inserted with the data to be transmitted may parse the packet sequence number control words for the Ethernet basic frames to analyze a frame header position of the Ethernet frame, thereby implementing synchronous transmission of the CPRI frame data and the Ethernet frame data.

Fig. 4 is a second structure block diagram of a data transmission device according to an example.

As shown in Fig. 4, the first insertion module 34 in an example includes:

a first acquisition unit 402, coupled to a second determination unit 406 and configured to acquire an effective data volume averagely borne in each Ethernet basic frame in the Ethernet frame;
a first determination unit 404, coupled to the second determination unit 406 and configured to determine a second number of CPRI basic frames averagely borne in each Ethernet basic frame in the Ethernet frame according to a first number of CPRI basic frames in the CPRI frame and a format of the Ethernet frame;
the second determination unit 406, configured to determine the data volume of each CPRI basic frame averagely borne in each Ethernet basic frame according to the effective data volume and the second number;
a first allocation unit 408, coupled to the second determination unit 406 and configured to allocate the data to be transmitted to the Ethernet basic frames according to the data volume of each CPRI basic frame averagely borne in each Ethernet basic frame and the format of the Ethernet frame; and
a first insertion unit 410, coupled to the first allocation unit 408 and configured to correspondingly insert the allocated data to be transmitted into the Ethernet basic frames.

In an example, the data volume of each CPRI basic frame averagely borne in each Ethernet basic frame may be determined according, but not limited, to the following formulae:

$$C = R / (N \times M)$$

and

$$D = \frac{Y}{C},$$

where C represents the second number, R represents the first number, N represents a number of slot frames in the Ethernet frame, M represents a number of Ethernet basic frames in each slot frame, Y represents the effective data volume and D represents the data volume of each CPRI basic frame averagely borne in each Ethernet basic frame.

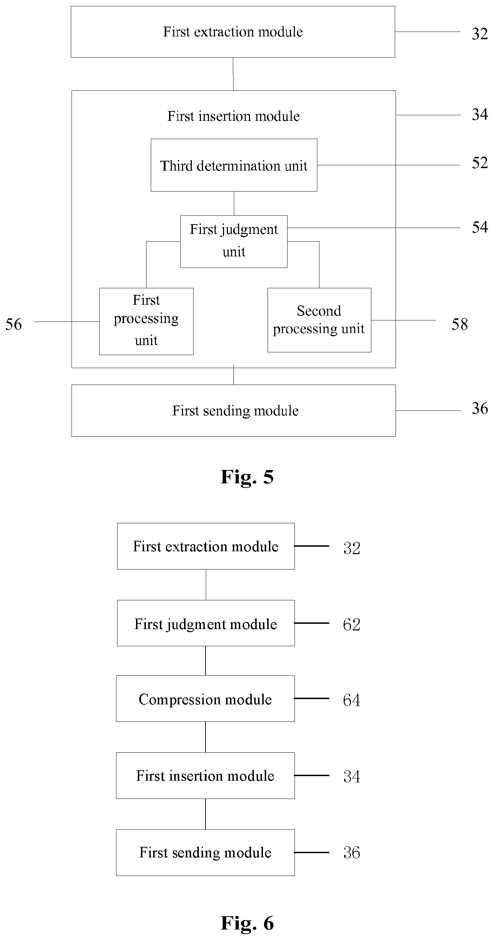

Fig. 5 is a third structure block diagram of a data transmission device according to an example. As shown in Fig. 5, the first insertion module 34 in an example includes:

a third determination unit 52, configured to determine a data volume borne in each Ethernet frame according to a data transmission rate of the interface transmitting the Ethernet frame;
a first judgment unit 54, coupled to the third determination unit 52 and configured to judge whether the data volume borne in each Ethernet frame is smaller than the data volume of the data to be transmitted or not;
a first processing unit 56, coupled to the first judgment unit 54 and configured to, under the condition of judging that the data volume borne in each Ethernet frame is smaller than the data volume of the data to be transmitted, insert the data to be transmitted into multiple Ethernet frames, or screen the data in the preset data volume from the data to be transmitted, insert the data in the preset data volume into an Ethernet frame and discard the other data, except the screened data in the preset data volume in the data to be transmitted; and/or,

a second processing unit 58, coupled to the first judgment unit 54 and configured to, under the condition of judging that the data volume borne in each Ethernet frame is not smaller than the data volume of the data to be transmitted, insert the data to be transmitted into an Ethernet frame.

In an example, the data volume borne in the Ethernet frame may be determined according, but not limited, to the following formula:

$$X = \frac{P \times T}{8}$$

where P represents the data transmission rate of the interface transmitting the Ethernet frame and T represents the period of the Ethernet frame.

Fig. 6 is a fourth structure block diagram of a data transmission device according to an example. As shown in Fig. 6, the device in an example further includes:

a first judgment module 62, coupled to the first extraction module 32 and configured to judge whether to compress the data to be transmitted or not; and a compression module 64, coupled between the first judgment module 62 and the first insertion module 34 and configured to, under the condition of judging to compress the data to be transmitted, compress the data to be transmitted according to a preset compression algorithm and determine the compressed data to be transmitted as the data to be transmitted which is to be inserted into the Ethernet frame, or, under the condition of judging not to compress the data to be transmitted, transparently transmit the data to be transmitted.

In an example, the Ethernet frame may include, but not limited to, a data transmission region and the data transmission region is configured to transmit the data to be transmitted.

In an example, the Ethernet frame may further include, but not limited to, a control information transmission region and the control information transmission region is configured to transmit control information of the Ethernet frame.

It is to be noted that each module may be implemented through software or hardware and the latter may be implemented in, but not limited to, the following manners: the modules are all located in the same processor, or, the modules are located in multiple processors respectively.

Example 4

The example also provides a data transmission device. The device is configured to implement the abovementioned example and optional implementation modes, and what has been described will not be elaborated. For example, term "module", used below, may be a combination of software and/or hardware capable of realizing a preset function. Although the device described in the following example is preferably implemented with software, implementation with hardware or a combination of the software and the hardware is also possible and conceivable.

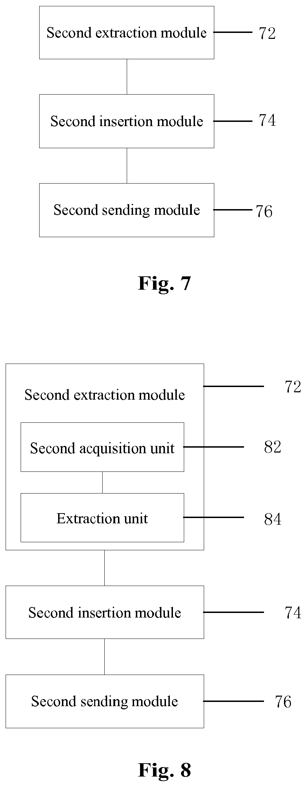

Fig. 7 is a fifth structure block diagram of a data transmission device according to an example. As shown in Fig. 7, the device includes:

a second extraction module 72, configured to extract data to be transmitted from a received Ethernet frame, a period of the Ethernet frame being the same as a period of a CPRI frame; a second insertion module 74, coupled to the second extraction module 72 and configured to insert the data to be transmitted into the CPRI frame; and a second sending module 76, coupled to the second insertion module 74 and configured to send the CPRI frame.

In an example, the data transmission device may be applied, but not limited, to a scenario of coverage of a communication network, for example, a scenario where an interface transmitting the Ethernet frame is interconnected with an optical interface of a BBU through a cable during indoor coverage of the communication network.

Through the device, the second extraction module is configured to extract the data to be transmitted from the received Ethernet frame, the period of the Ethernet frame being the same as the period of the CPRI frame; the second insertion module is configured to insert the data to be transmitted into the CPRI frame; and the second sending module is configured to send the CPRI frame. In such a manner, the solution is adopted to insert the data to be transmitted into the Ethernet frame of which the period is the same as that of the CPRI frame for transmission. Therefore, synchronous transmission of CPRI frame data and Ethernet frame data is implemented and the problem of incapability in synchronously transmitting the CPRI frame data and the Ethernet frame data in the related art is solved.

In the example, in, but not limited to, a manner of setting packet sequence number control words for Ethernet basic frames, the data transmission device receiving the Ethernet frame inserted with the data to be transmitted may analyze a frame header position of the Ethernet frame according to parsing over the packet sequence number control words for the Ethernet basic frames, thereby implementing synchronous transmission of the CPRI frame data and the Ethernet frame data.

Fig. 8 is a sixth structure block diagram of a data transmission device according to an example. As shown in Fig. 8, the second extraction module 72 in an example includes:

a second acquisition unit 82, configured to acquire an effective data volume borne in each Ethernet basic frame in the Ethernet frame; and

an extraction unit 84, coupled to the second acquisition unit 82 and configured to extract data from each Ethernet basic frame to obtain the data to be transmitted according to a format of the Ethernet frame and the effective data volume borne in each Ethernet basic frame.

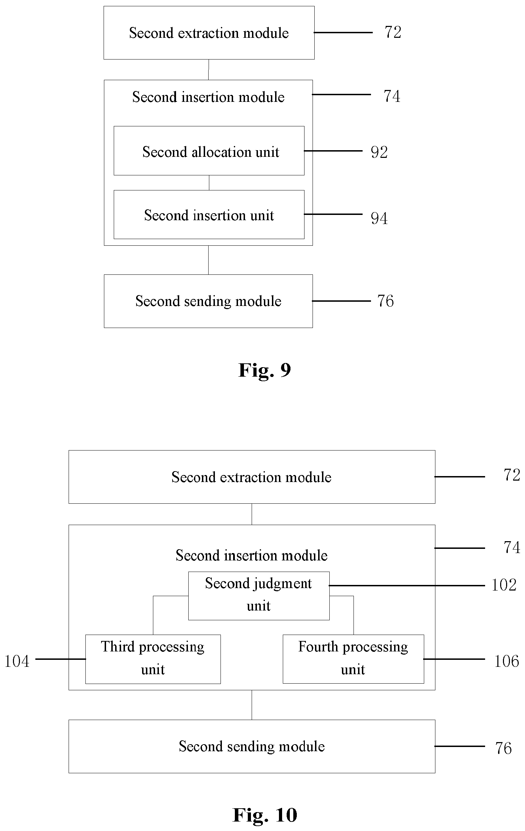

Fig. 9 is a seventh structure block diagram of a data transmission device according to an example. As shown in Fig. 9, the second insertion module 74 in an example includes:

a second allocation unit 92, configured to allocate the data to be transmitted to the CPRI basic frames in the CPRI frame according to a format of the CPRI frame; and

a second insertion unit 94, coupled to the second allocation unit 92 and configured to correspondingly insert the allocated data to be transmitted into the CPRI basic frames.

Fig. 10 is an eighth structure block diagram of a data transmission device according to an example. As shown in Fig. 10, the second insertion module 74 in an example includes:

a second judgment unit 102, configured to judge whether a data volume of the data to be transmitted is larger than a data volume borne in each CPRI frame or not;

a third processing unit 104, coupled to the second judgment unit 102 and configured to, under the condition of judging that the data volume of the data to be transmitted is larger than the data volume borne in each CPRI frame, insert the data to be transmitted into multiple CPRI frames, or screen data in a preset data volume from the data to be transmitted, insert the data in the preset data volume into a CPRI frame and discard the other data, except the screened data in the preset data volume, in the data to be transmitted; and/or,

a fourth processing unit 106, coupled to the second judgment unit 102 and configured to, under the condition of judging that the data volume of the data to be transmitted is not larger than the data volume borne in each CPRI frame, insert the data to be transmitted into a CPRI frame.

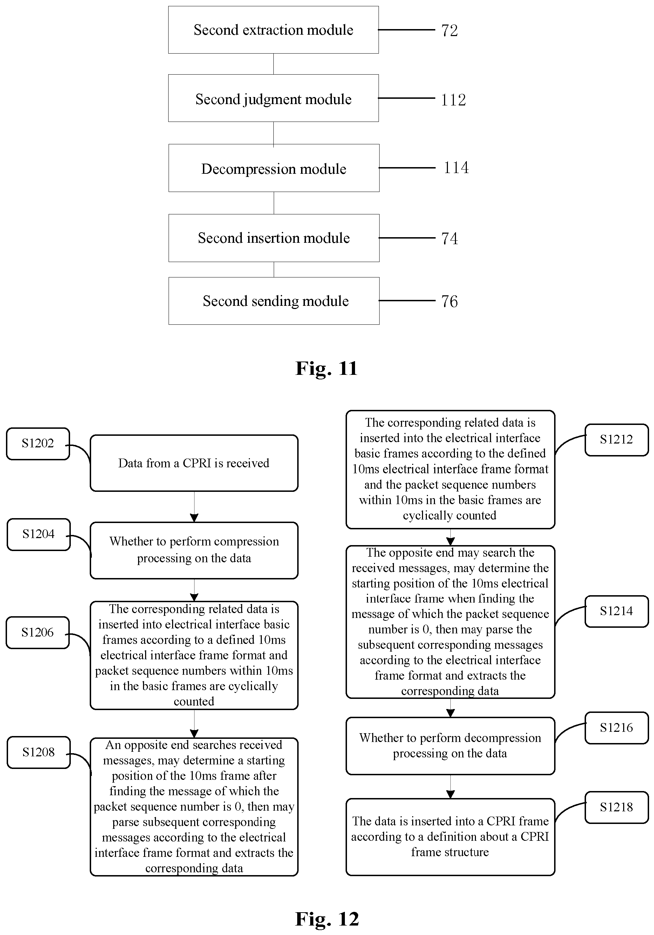

Fig. 11 is a ninth structure block diagram of a data transmission device according to an example. As shown in Fig. 11, the device in an example further includes:

a second judgment module 112, coupled to the second extraction module 72 and configured to judge whether to decompress the data to be transmitted or not;

a decompression module 114, coupled between the second judgment module 112 and the second insertion module 74 and configured to, under the condition of judging to decompress the data to be transmitted, decompress the data to be transmitted according to a preset decompression algorithm and determine the decompressed data to be transmitted as the data to be transmitted which is to be inserted into the CPRI frame; or, under the condition of judging not to decompress the data to be transmitted, transparently transmit the data to be transmitted.

It is to be noted that each module may be implemented through software or hardware and the latter may be implemented in, but not limited to, the following manners: the modules are all located in the same processor, or, the modules are located in multiple processors respectively.

Detailed descriptions will be made below in combination with an optional example of the invention.

The optional example of the invention provides an electrical interface frame capable of synchronously converting data of a CPRI frame and an Ethernet frame. The CPRI frame data and the Ethernet frame data may be synchronously converted through a defined frame format. On such a basis, a method and device for implementing synchronous transmission of optical and electrical data are also disclosed. Through the photoelectric conversion device, bridging communication between a BBU and an RRU may be implemented well.

In an indoor coverage system, there is a need for a device for implementing synchronous data conversion between optical and electrical lines, thereby ensuring communication between the BBU and the RRU. According to the photoelectric conversion method provided in the optional example of the invention, the defined electrical interface frame is used, thereby completing conversion between the optical and electrical data well.

The data transmission method provided in the optional example includes the following basic steps, for example, for downlink processing of converting a CPRI frame to an Ethernet frame. Fig. 12 is a flowchart of a data transmission method according to an optional example. As shown in Fig. 12, descriptions will be made for an uplink and a downlink respectively.

For downlink processing

In S1202, an optical interface of the photoelectric conversion device receives data (i.e., a CPRI frame) sent by an opposite end and extracts data.

In S1204, the photoelectric conversion device processes the extracted data.

In S1206, the photoelectric conversion device completes synchronous conversion from the CPRI frame to an Ethernet frame.

In S1208, an electrical interface of the photoelectric conversion device sends the Ethernet frame to an Ethernet interface device of the opposite end and the Ethernet interface device may parse a 10ms frame header of the Ethernet frame to extract the data.

For uplink processing

In S1212, the Ethernet interface device processes and transmits a received signal to the photoelectric conversion device.

In S1214, the photoelectric conversion device parses the 10ms frame header according to the data received by the electrical interface and according to a frame format and extracts the data.

In S1216, the photoelectric conversion device processes the extracted data.

In S1218, the photoelectric conversion device inserts the data into a corresponding CPRI frame structure and then transmits the data to an optical interface device of the opposite end through an optical fiber.

Each step will be analyzed below.

Analysis about the first step for downlink processing:

the optical interface of the photoelectric conversion device receives the data in the CPRI frame format from the opposite end and correspondingly extracts a data part and control word part thereof according to a definition about the CPRI frame format.

Analysis about the second step for downlink processing:

whether to perform compression algorithm processing on the extracted data part or not is selected, if compression process is not adopted, a transparent transmission manner is adopted and, if a compression algorithm is adopted, the corresponding algorithm is correspondingly selected to compress the data.

Analysis about the third step for downlink processing:

the following method is adopted for synchronous photoelectric conversion:

a period of a CPRI radio frame is T (for example, 10ms period); and
the CPRI radio frame consists of R (for example, R=38,400) basic frames.

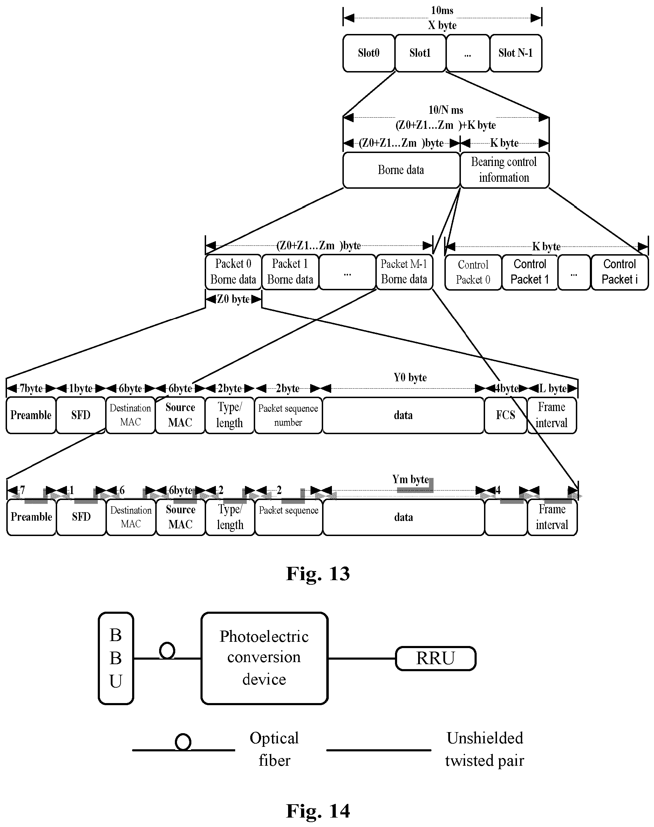

Based on the concept, the electrical interface should complete mapping of the data of the 38,400 CPRI basic frames to the electrical interface frame (i.e., the Ethernet frame) within CPRI 10ms period. Fig. 13 is a schematic diagram of a frame structure of an Ethernet frame according to an optional example of the invention.

A limit to transmission of a data volume borne in each CPRI basic frame in the CPRI frame of the optical interface in the Ethernet frame of the electrical interface may be determined according to transmission capabilities of the electrical interface under different rates.

Under the condition that the rate of the electrical interface is 1Gbit/s, a data volume transmitted by the electrical interface within 10ms is:

$$g = \frac{1Gbit/s \times 10ms}{8} = 1.25 \times 10^6 \; Byte$$ .

Under the condition that the rate of the electrical interface is P Gbit/s, the data volume transmitted by the electrical interface within 10ms is:

$$X = P \times g \; Byte$$ .

As shown in Fig. 13, with reference to the format of the CPRI frame, a format of the electrical interface frame takes 10ms as a reference and is divided into the following segments.

(1) 10ms Ethernet frame

Each 10ms Ethernet frame consists of N slot frames and each slot frame averagely includes a data volume of (X/Y) bytes.

(2) Slot frame

Each slot frame consists of an electrical interface superframe and control information in a K-byte interval range.

The electrical interface superframe includes a data volume of (X/N-K) bytes.

A control information region occupies K bytes in each slot frame and may bear multiple discontinuous Ethernet signaling messages.

(3) Electrical interface superframe

Each electrical interface superframe consists of M Ethernet basic frames and each Ethernet basic frame averagely includes Z bytes.

(4) Ethernet basic frame

Each Ethernet basic frame is an Ethernet message and a data volume of effective data which is averagely transmitted is Y bytes.

A number of CPRI basic frames borne in each Ethernet basic frame is:

$$C = 38,400 / (N \times M)$$

and then, a data volume of each CPRI basic frame averagely borne in the electrical interface basic frame is:

$$D = \frac{Y}{C} \, Byte \quad ,$$

where N, K, M and Y are all randomly optional values. The extracted data is inserted into the Ethernet frame according to the above obtained information. For keeping a synchronization characteristic, packet sequence number control words may be defined, that is, all the Ethernet basic frames within 10ms are cyclically counted. In such a manner, synchronous conversion between the optical and electrical data is completed.

Analysis about the fourth step for downlink processing:
the opposite end recovers a frame header of the 10ms Ethernet frame through parsing over a zeroth packet, thereby completing synchronization between the photoelectric conversion device and the Ethernet interface device, and meanwhile, parses the corresponding data according to the format of the electrical interface frame. In such a manner, the synchronization characteristic of the whole link is ensured.

Analysis about the first step for uplink processing:
the Ethernet interface device processes the received signal and then inserts the data into a corresponding Ethernet packet according to the defined format of the 10ms electrical interface frame for synchronous photoelectric conversion and transmits it to the photoelectric conversion device through a cable.

Analysis about the second step for uplink processing:
the electrical interface of the photoelectric conversion device recovers the 10ms frame through parsing over the zeroth packet according to the format of the electrical interface frame (i.e., the Ethernet frame) for synchronous photoelectric conversion, thereby completing synchronization between the devices. Meanwhile, the data in all Ethernet messages within 10ms is extracted.

Analysis about the third step for uplink processing:
whether to perform decompression algorithm processing on the extracted data or not is selected, if decompression is not adopted, the transparent transmission manner is adopted and, if a decompression algorithm is adopted, the corresponding algorithm is selected to decompress the data.

Analysis about the fourth step for uplink processing:
the optical interface of the photoelectric conversion device inserts the data subjected to decompression processing within 10ms into a corresponding CPRI frame structure within 10ms and then transmits the data to the optical interface device of the opposite end through an optical fiber. In such a manner, synchronous conversion between the electrical and optical data is completed.

According to the data transmission method provided in the optional example of the invention, conversion between the optical and electrical data may be completed in a state of keeping the synchronization characteristic of the whole link. The photoelectric conversion device based on the method is significant for an indoor coverage application scenario in a communication system and may support bridging between the BBU and the RRU to complete conversion through the optical fiber and the cable.

The data transmission method and device provided in the optional example of the invention will be explained and described below with optional examples.

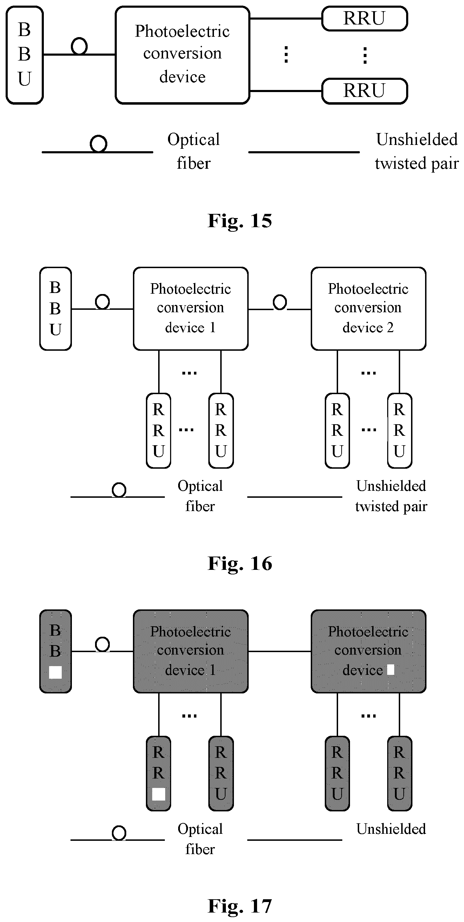

A first optional example: Fig. 14 is a first structure block diagram of a data transmission device according to an optional example and Fig. 15 is a second structure block diagram of a data transmission device according to an implementation example. As shown in Fig. 14 and 15, a connecting form of the data transmission device (i.e., the photoelectric conversion device) in a network may be, but not limited to: the BBU-the photoelectric conversion device-the RRU. In the example, for example, Y-value data is all fixed and data to be transmitted is protocol-A/B data.

For downlink processing, the following steps may be included.

In 11, the BBU inserts the sampled protocol-A/B data into CPRI basic frame data.

In 12, the photoelectric conversion device extracts data according to a background configuration and according to a CPRI frame format and determines whether to perform compression processing on or directly transparently transmit it to the electrical interface according to the background configuration. The photoelectric conversion device inserts the corresponding data into data parts of Ethernet messages (i.e., Ethernet basic frames) in an Ethernet frame according to the frame format shown in Fig. 13 that a value of Y in each Ethernet frame is fixed and may simultaneously insert related information into control information parts, thereby completing synchronous conversion between optical and electrical data. Packet sequence numbers are defined in the Ethernet messages and all the packets within 10ms are cyclically counted through the packet sequence numbers for regular extraction for system synchronization.

In 13, the RRU receives the Ethernet messages sent by the photoelectric conversion device, extracts, when receiving the zeroth packet, the 10ms frame header according to the packet sequence numbers of the Ethernet packets and simultaneously extracts the data for processing according to the frame format shown in Fig. 13, thereby completing synchronization between the devices.

For uplink processing, the following steps may be included.

In 14, whether to perform compression processing on an A/B signal received by an antenna of the RRU or not is selected through the background configuration. The data is inserted into the Ethernet messages according to the frame format shown in Fig. 13 and the control information is simultaneously inserted into control messages for sending to the photoelectric conversion device through the cable.

In 15, the electrical interface of the photoelectric conversion device receives the Ethernet messages, recovers, when receiving the zeroth packet, the 10ms header, simultaneously extracts the corresponding data of the data and control information parts in the messages and performs decompression algorithm processing on the extracted data for transmission to an optical interface processing part. The optical interface processing part correspondingly inserts the data according to the CPRI frame format.

In 16, the photoelectric conversion device transmits the data to the BBU through the optical fiber.

The example may further include, but not limited to, the following topological connecting structures.

1: The BBU is connected with the photoelectric conversion device through the optical fiber.
2: The photoelectric conversion device is connected with the RRU through the cable.
3: The photoelectric conversion device is supported to be connected with one or more RRUs.

A second optional example: as shown in Fig. 14 and 15, a connecting form of the data transmission device (i.e., the photoelectric conversion device) in a network may be, but not limited to: the BBU-the photoelectric conversion device-the RRU. In the example, for example, a Y value may be flexibly configured and data to be transmitted is protocol-A/B data.

For downlink processing, the following steps may be included.

In 21, the BBU inserts the sampled protocol-A/B data into CPRI basic frame data.

In 22, the photoelectric conversion device extracts data according to a background configuration and according to a CPRI frame format and determines whether to perform compression processing on or directly transparently transmit it to the electrical interface according to the background configuration. Y of each Ethernet message frame may dynamically change according to the flexible background configuration and according to a requirement and related control information may simultaneously be inserted into control information parts, thereby completing conversion between optical and electrical data. Packet sequence numbers are defined in the Ethernet messages and all the packets within 10ms are cyclically counted through the packet sequence numbers for regular extraction for system synchronization.

In 23, the RRU receives the Ethernet messages sent by the photoelectric conversion device, parses, when receiving the zeroth packet, the 10ms header according to the packet sequence numbers of the Ethernet packets and simultaneously extracts the data according to the frame format shown in Fig. 13, thereby completing synchronization between the devices.

For uplink processing, the following steps may be included.

In 24, whether to perform compression processing on an A/B signal received by an antenna of the RRU or not is selected through the background configuration. The data is inserted into the Ethernet messages according to the frame format shown in Fig. 13 and the control information is simultaneously inserted into control messages for sending to the photoelectric conversion device through the cable.

In 25, the electrical interface of the photoelectric conversion device receives the Ethernet messages, recovers, when receiving the zeroth packet, the 10ms header, simultaneously extracts the corresponding data of the data and control information parts in the messages, determines to perform decompression processing on the extracted signal according to the background configuration and transmits it to an optical interface processing part. The optical interface processing part correspondingly inserts the data according to the CPRI frame format.

In 26, the photoelectric conversion device transmits the data to the BBU through the optical fiber.

The example may further include, but not limited to, the following topological connecting structures.

1: The BBU is connected with the photoelectric conversion device through the optical fiber.
2: The photoelectric conversion device is connected with the RRU through the cable.
3: The photoelectric conversion device is supported to be connected with one or more RRUs.

A third optional example: Fig. 16 is a third structure block diagram of a data transmission device according to an optional example. As shown in Fig. 16, a connecting form of the data transmission device (i.e., the photoelectric conversion device) in a network may be, but not limited to: the BBU-a photoelectric conversion device 1-a photoelectric conversion device 2-the RRU. In the example, for example, data to be transmitted is protocol-A/B data.

For downlink processing, the following steps may be included.

In 31, the BBU inserts the sampled protocol-A/B data into CPRI basic frame data.

In 32, the photoelectric conversion device 1 extracts all data according to a background configuration and according to a CPRI frame format and determines whether to perform compression processing on or directly transparently transmit it to a hub according to the background configuration. The photoelectric conversion device 1 inserts the corresponding data into data parts of Ethernet messages according to the frame format shown in Fig. 13 and may simultaneously transmit related information in control information parts, thereby completing photoelectric conversion. Packet sequence numbers are defined in the Ethernet messages and all the packets within 10ms are cyclically counted through the packet sequence numbers for regular extraction for system synchronization.

In 33, the photoelectric conversion device 2 extracts all optical interface data sent by the photoelectric conversion device 1 according to the CPRI frame format and determines whether to perform compression processing or not according to the background configuration. The photoelectric conversion device 2 inserts the corresponding data into the data parts of the Ethernet messages according to the frame format shown in Fig. 13 and may simultaneously transmit the related information in the control information parts, thereby completing photoelectric conversion. Packet sequence numbers are defined in the Ethernet messages and all the packets within 10ms are cyclically counted through the packet sequence numbers for regular extraction for system synchronization.

In 34, the RRU receives the Ethernet messages sent by the photoelectric conversion device 1 or the photoelectric conversion device 2, extracts, when receiving the zeroth packet, the 10ms frame header according to the packet sequence numbers of the Ethernet packets and simultaneously extracts the data of the data parts for processing according to the frame format shown in Fig. 13, thereby completing synchronization between the devices.

For uplink processing, the following steps may be included.

In 35, whether to perform compression processing on an A/B signal received by an antenna of the RRU or not is selected through the background configuration. The data is inserted into the Ethernet messages according to the frame format shown in Fig. 13 and the control information is simultaneously inserted into control messages for sending to the photoelectric conversion device 1 and the photoelectric conversion device 2 through the cable.

In 36, the electrical interfaces of the photoelectric conversion device 1 and the photoelectric conversion device 2 receive the Ethernet messages, recover, when receiving the zeroth packet, the 10ms header, simultaneously extract the corresponding data of the data and control information parts in the messages, determine whether to perform decompression processing on the extracted data or not according to the background configuration and then send the data to an optical interface processing part. The optical interface processing part correspondingly inserts the data according to the CPRI frame format.

In 37, the photoelectric conversion device1 1 receives the optical interface messages sent by the photoelectric conversion device 2, merges them with data through the electrical interface of a present stage and perform corresponding insertion according to the CPRI frame format.

In 38, the photoelectric conversion device 1 transmits the data to the BBU through the optical fiber.

The example may further include, but not limited to, the following topological connecting structures.

    1: The BBU is connected with the photoelectric conversion device through the optical fiber.
    2: The photoelectric conversion device 1 and the photoelectric conversion device 2 are supported to be cascaded.
    3: The photoelectric conversion device 1 is connected with the photoelectric conversion device 2 through an optical fiber.
    4: The photoelectric conversion devices are supported to be connected with one or more RRUs.
    5: The photoelectric conversion devices are connected with the RRU through the cable.

A fourth optional example: Fig. 17 is a fourth structure block diagram of a data transmission device according to an optional example. As shown in Fig. 17, a connecting form of the data transmission device (i.e., the photoelectric conversion device) in a network may be, but not limited to: the BBU-a photoelectric conversion device 1-a photoelectric conversion device 2-the RRU.

For downlink processing, the following steps may be included.

In 41, the BBU inserts sampled protocol-A/B data into CPRI basic frame data.

In 42, the photoelectric conversion device 1 extracts all data according to a background configuration and according to a CPRI frame format and determines whether to perform compression processing on or directly transparently transmit it to a hub according to the background configuration. The photoelectric conversion device 1 inserts the corresponding data into data parts of Ethernet messages according to the frame format shown in Fig. 13 and may simultaneously transmit related information in control information parts, thereby completing photoelectric conversion. Packet sequence numbers are defined in the Ethernet messages and all the packets within 10ms are cyclically counted through the packet sequence numbers for regular extraction for system synchronization.

In 43, the photoelectric conversion device 2 or the RRU receives the Ethernet messages sent by the photoelectric conversion device 1, extracts, when receiving the zeroth packet, the 10ms header according to the packet sequence numbers of the Ethernet messages and simultaneously extracts the data for processing according to the frame format shown in Fig. 13, thereby completing synchronization between the devices.

For uplink processing, the following steps may be included.

In 44, whether to perform compression processing on an A/B signal received by an antenna of the RRU or not is selected through the background configuration. The data is inserted into the Ethernet messages according to the frame format shown in Fig. 13 and the control information is simultaneously inserted into control messages for sending to the photoelectric conversion devices through the cable.

In 45, the electrical interface of the photoelectric conversion device 1 receives the Ethernet messages, recovers, when receiving the zeroth packet, the 10ms header, simultaneously extracts the corresponding data of the data and control information parts in the messages and performs decompression algorithm processing on the extracted data for transmission to an optical interface processing part. The optical interface processing part correspondingly inserts the data according to the CPRI frame format.

In 46, the photoelectric conversion device 1 transmits the data to the BBU through the optical fiber.

The example may further include, but not limited to, the following topological connecting structures.

> 1: The BBU is connected with the photoelectric conversion devices through the optical fiber.
> 2: The photoelectric conversion device 1 and the photoelectric conversion device 2 are supported to be cascaded.
> 3: The photoelectric conversion device 1 is connected with the photoelectric conversion device 2 through a cable.
> 4: The photoelectric conversion devices are supported to be connected with one or more RRUs.
> 5: The photoelectric conversion devices are connected with the RRU through the cable.

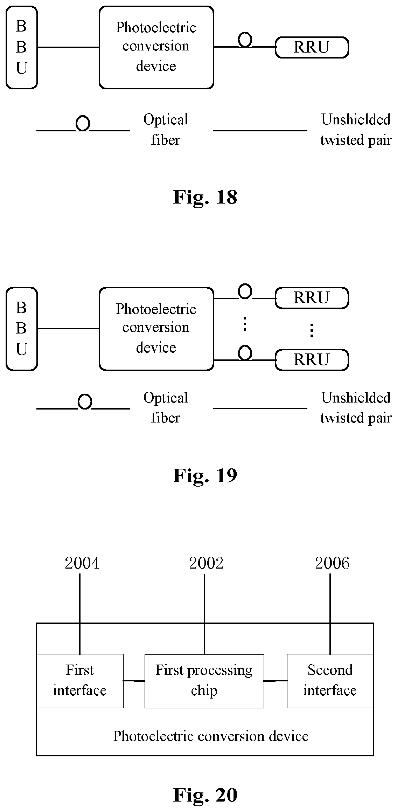

A fifth optional example: Fig. 18 is a fifth structure block diagram of a data transmission device according to an optional example and Fig. 19 is a sixth structure block diagram of a data transmission device according to an implementation example. As shown in Fig. 18 and 19, a connecting form of the data transmission device (i.e., the photoelectric conversion device) in a network may be, but not limited to: the BBU-the photoelectric conversion device-the RRU. In the example, for example, a Y value may be fixedly or fixedly configured and data to be transmitted is protocol-A/B data.

For downlink processing, the following steps may be included.

In 51, the BBU selects whether to perform compression processing on a sampled protocol-A/B data signal or not through a background configuration. Data is inserted into Ethernet messages according to a frame format shown in Fig. 13 and control information is simultaneously inserted into control messages for sending to the photoelectric conversion device through the cable.

In 52, the electrical interface of the photoelectric device receives the Ethernet messages, recovers, when receiving the data of the zeroth packet, the 10ms header, simultaneously extracts the corresponding data of data and control information parts in the messages and performs decompression algorithm on the extracted data for transmission to an optical interface processing part. The optical interface processing part correspondingly inserts the data according to the CPRI frame format.

In 53, the photoelectric conversion device transmits the data to the RRU through the optical fiber.

For uplink processing, the following steps may be included.

In 54, the RRU inserts the sampled protocol-A/B data into CPRI basic frame data.

In 55, the photoelectric conversion device extracts the data according to the background configuration and according to the CPRI frame format and determines whether to perform compression processing on or directly transparently transmit it to the electrical interface according to the background configuration. The photoelectric conversion device inserts the corresponding data into the data parts of the Ethernet messages according to the frame format shown in Fig. 13 that a value of Y in each Ethernet frame may be set to be fixedly or flexibly configured and may simultaneously insert related information into the control information parts, thereby completing photoelectric conversion. Packet sequence numbers are defined in the Ethernet messages and all the packets within 10ms are cyclically counted through the packet sequence numbers for regular extraction for system synchronization.

In 56, the BBU receives the Ethernet messages sent by the photoelectric conversion device, extracts, when receiving the zeroth packet, the 10ms header according to the packet sequence numbers of the Ethernet packets and simultaneously extracts the data for processing according to the frame format shown in Fig. 13, thereby completing synchronization between the devices.

The example may further include, but not limited to, the following topological connecting structures.

> 1: The BBU is connected with the photoelectric conversion device through the cable.
> 2: The photoelectric conversion device is connected with one or more RRUs through the cable.
> 3: The photoelectric conversion device is connected with the RRU through the optical fiber.

The above examples are adopted to not limit but only describe the technical solutions of the invention. Those of ordinary skill in the art may make modifications or equivalent replacements to the technical solutions of the invention without departing from the spirit and scope of the invention. The scope of protection of the invention should be subject to the claims.

Example 5

The example also provides a photoelectric conversion device. Fig. 20 is a structure block diagram of a photoelectric conversion device according to an example of the invention. As shown in Fig. 20, the device includes a first processing chip 2002, a first interface 2004 and a second interface 2006. The first processing chip 2002 is connected between the first interface 2004 and the second interface 2006. The first interface 2004 is configured to receive a CPRI frame. The first processing chip 2002 is configured to extract data to be transmitted from the received CPRI frame and insert the data to be transmitted into an Ethernet frame, a period of the Ethernet frame being the same as a period of the CPRI frame. The second interface 2006 is configured to send the Ethernet frame.

In an example, the photoelectric conversion device may be applied, but not limited, to a scenario of coverage of a communication network, for example, a scenario where an interface transmitting the Ethernet frame is interconnected with an optical interface of a BBU through a cable during indoor coverage of the communication network.

Through the photoelectric conversion device, the first processing chip extracts the data to be transmitted from the received CPRI frame and inserts the data to be transmitted into the Ethernet frame, the period of the Ethernet frame being the same as the period of the CPRI frame; and the second interface sends the Ethernet frame. In such a manner, the solution is adopted to insert the data to be transmitted into the Ethernet frame of which the period is the same as that of the CPRI frame for transmission. Therefore, synchronous transmission of CPRI frame data and Ethernet frame data is implemented and the problem of incapability in synchronously transmitting the CPRI frame data and the Ethernet frame data in the related art is solved.

In the example, the first processing chip may be, but not limited to, a Field-Programmable Gate Array (FPGA) chip and the like.

In the example, the first interface may be, but not limited to an optical interface and the second interface may be, but not limited to an electrical interface.

In an example, functions of the first extraction module and/or the first insertion module may be realized by the first processing chip. A function of the first sending module may be realized by the first interface.

In an example, the first processing chip is configured to: acquire an effective data volume averagely borne in each Ethernet basic frame in the Ethernet frame; determine a second number of CPRI basic frames averagely borne in each Ethernet basic frame in the Ethernet frame according to a first number of CPRI basic frames in the CPRI frame and a format of the Ethernet frame; determine a data volume of each CPRI basic frame averagely borne in each Ethernet basic frame according to the effective data volume and the second number; allocate the data to be transmitted to the Ethernet basic frames according to the data volume of each CPRI basic frame averagely borne in each Ethernet basic frame and the format of the Ethernet frame; and correspondingly insert the allocated data to be transmitted into the Ethernet basic frames.

In an example, the first processing chip is configured to: determine a data volume borne in each Ethernet frame according to a data transmission rate of an interface transmitting the Ethernet frame; judge whether the data volume borne in each Ethernet frame is smaller than a data volume of the data to be transmitted or not; under the condition of judging that the data volume borne in each Ethernet frame is smaller than the data volume of the data to be transmitted, insert the data to be transmitted into multiple Ethernet frames, or screen data in a preset data volume from the data to be transmitted, insert the data in the preset data volume into an Ethernet frame and discard the other data, except the screened data in the preset data volume, in the data to be transmitted; and/or, under the condition of judging that the data volume borne in each Ethernet frame is not smaller than the data volume of the data to be transmitted, insert the data to be transmitted an Ethernet frame.

In an example, the first processing chip is configured to: before the data to be transmitted is inserted into the Ethernet frame, judge whether to compress the data to be transmitted or not; and under the condition of judging to compress the data to be transmitted, compress the data to be transmitted according to a preset compression algorithm and determine the compressed data to be transmitted as the data to be transmitted which is to be inserted into the Ethernet frame, or, under the condition of judging not to compress the data to be transmitted, transparently transmit the data to be transmitted.

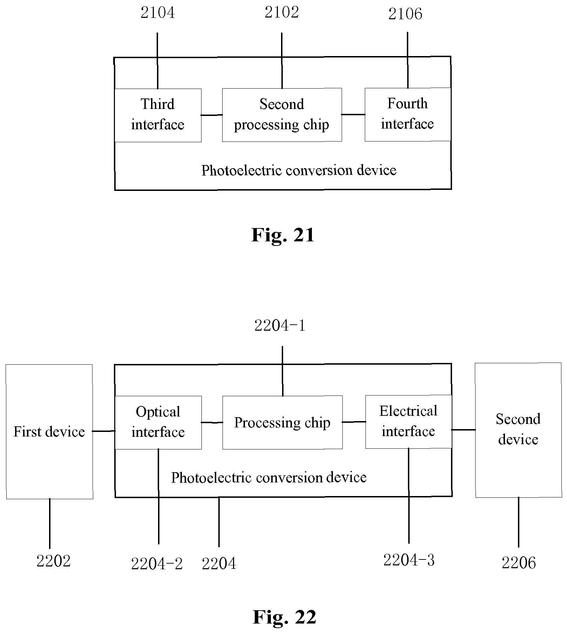

The example also provides another photoelectric conversion device. Fig. 21 is a structure block diagram of another photoelectric conversion device according to an example of the invention. As shown in Fig. 21, the device includes a second processing chip 2102, a third interface 2104 and a fourth interface 2106, wherein the second processing chip 2102 is connected between the third interface 2104 and the fourth interface 2106; the third interface 2104 is configured to receive an Ethernet frame; the second processing chip 2102 is configured to extract data to be transmitted from the received Ethernet frame, a period of the Ethernet frame being the same as a period of a CPRI frame and insert the data to be transmitted into the CPRI frame; and the fourth interface 2106 is configured to send the CPRI frame.

In an example, the photoelectric conversion device may be applied, but not limited, to a scenario of coverage of a communication network, for example, a scenario where an interface transmitting the Ethernet frame is interconnected with an optical interface of a BBU through a cable during indoor coverage of the communication network.

Through the photoelectric conversion device, the second processing chip extract the data to be transmitted from the received Ethernet frame received by the third interface, the period of the Ethernet frame being the same as the period of the CPRI frame, and inserts the data to be transmitted into the CPRI frame; and the fourth interface sends the CPRI frame. In such a manner, the solution is adopted to insert the data to be transmitted in the received Ethernet frame of which the period is the same as that of the CPRI frame into the CPRI frame for transmission. Therefore, synchronous transmission of CPRI frame data and Ethernet frame data is implemented and the problem of incapability in synchronously transmitting the CPRI frame data and the Ethernet frame data in the related art is solved.

In the example, the second processing chip may be, but not limited to, an FPGA chip and the like.

In the example, the third interface may be, but not limited to an electrical interface and the fourth interface may be, but not limited to, an optical interface.

In an example, functions of the second extraction module and/or the second insertion module may be realized by the second processing chip. A function of the second sending module may be realized by the fourth interface.

In an example, the second processing chip is configured to: acquire an effective data volume borne in each Ethernet basic frame in the Ethernet frame; and extract data from each Ethernet basic frame to obtain the data to be transmitted according to a format of the Ethernet frame and the effective data volume borne in each Ethernet basic frame.

In an example, the second processing chip is configured to: allocate the data to be transmitted to CPRI basic frames in the CPRI frame according to a format of the CPRI frame; and correspondingly insert the allocated data to be transmitted into the CPRI basic frames.

In an example, the second processing chip is configured to: judge whether a data volume of the data to be transmitted is larger than a data volume borne in each CPRI frame or not; under the condition of judging that the data volume of the data to be transmitted larger than the data volume borne in each CPRI frame, insert the data to be transmitted into multiple CPRI frames, or screen data in a preset data volume from the data to be transmitted, insert the data in the preset data volume into a CPRI frame and discard the other data, except the screened data in the preset data volume, in the data to be transmitted; and/or, under the condition of judging that the data volume of the data to be transmitted is not larger than the data volume borne in each CPRI frame, insert the data to be transmitted into a CPRI frame.

In an example, the second processing chip is configured to: before the data to be transmitted is inserted into the CPRI frame, judge whether to decompress the data to be transmitted or not; and under the condition of judging to decompress the data to be transmitted, decompress the data to be transmitted according to a preset decompression algorithm and determine the decompressed data to be transmitted as the data to be transmitted which is to be inserted into the CPRI frame, or, under the condition of judging not to decompress the data to be transmitted, transparently transmit the data to be transmitted.

Example 6

The example also provides a photoelectric conversion system. Fig. 22 is a structure block diagram of a photoelectric conversion system according to an example. As shown in Fig. 22, the system includes a first device 2202, a photoelectric conversion device 2204 and a second device 2206.

The photoelectric conversion device 2204 includes a processing chip 2204-1, an optical interface 2204-2 and an electrical interface 2204-3, wherein the processing chip 2204-1 is connected between the optical interface 2204-2 and the electrical interface 2204-3, the optical interface 2204-2 is connected with the first device 2202 and the electrical interface 2204-3 is connected with the second device 2206.

The processing chip 2204-1 is configured to extract data to be transmitted from a CPRI frame received by the optical interface 2204-2 and insert the data to be transmitted into an Ethernet frame, a period of the Ethernet frame being the same as a period of the CPRI frame, and/or extract data to be transmitted from a Ethernet frame received by the electrical interface 2204-3, a period of the Ethernet frame being the same as a period of a CPRI frame and insert the data to be transmitted into the CPRI frame. The optical interface 2204-2 is configured to receive or send the CPRI frame. The electrical interface 2204-3 is configured to send or receive the Ethernet frame.

The first device 2202 is configured to receive the CPRI frame sent by the photoelectric device 2204 and acquire the data to be transmitted from the CPRI frame.

The second device 2206 is configured to receive the Ethernet frame sent by the photoelectric conversion device 2204 and acquire the data to be transmitted from the Ethernet frame.

In an example, the first device may include, but not limited to, a BBU, and the second device may include, but not limited to, at least one of one or more RRUs and one or more photoelectric conversion devices; or, the first device may include, but not limited to, at least one of one or more RRUs and one or more photoelectric conversion devices, and the second device may include, but not limited to, a BBU.

In an example, the processing chip 2204-1 may include, but not limited to, an FPGA chip.

In an example, in the example, the optical interface 2204-2 may be connected with the first device through, but not limited to, an optical fiber. The electrical interface 2204-3 may be connected with the second device through, but not limited to, an unshielded twisted pair.

*Example 7*

The example of the invention also provides a storage medium. In an example, in the example, the storage medium may be configured to store a program code configured to execute the following steps.

In S11, data to be transmitted is extracted from a received CPRI frame.

In S12, the data to be transmitted is inserted into an Ethernet frame, a period of the Ethernet frame being the same as a period of the CPRI frame.

In S13, the Ethernet frame is sent.

In an example, the storage medium is further configured to store a program code configured to execute method steps recorded in the abovementioned example.

In S21, data to be transmitted is extracted from a received Ethernet frame, a period of the Ethernet frame being the same as a period of a CPRI frame.

In S22, the data to be transmitted is inserted into a CPRI frame.

In S23, the CPRI frame is sent.

In an example, in the example, the storage medium may include, but not limited to, various media capable of storing program codes such as a U disk, a Read-Only Memory (ROM), a Random Access Memory (RAM), a mobile hard disk, a magnetic disk or an optical disk.

In an example, in the example, a processor executes method steps recorded in the abovementioned examples according to the program code stored in the storage medium.

In an example, optional examples in the example may refer to the examples described in the abovementioned examples and optional implementation modes and will not be elaborated in the example.

It is apparent that those skilled in the art should know that each module or each step of the invention may be implemented by a universal computing device, and the modules or steps may be concentrated on a single computing device or distributed on a network formed by a plurality of computing devices, and may in an example be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. Therefore, the invention is not limited to any specific hardware and software combination.

The above is only the optional example of the invention and not intended to limit the scope of protection of the invention. For those skilled in the art, the invention may have various modifications within the scope of the appended claims.

**Industrial Applicability**

In the technical solutions of the invention, the method includes that: the data to be transmitted is extracted from the received CPRI frame; the data to be transmitted is inserted into the Ethernet frame, the period of the Ethernet frame being the same as the period of the CPRI frame; and the Ethernet frame is sent. Therefore, the problem of incapability in synchronously transmitting CPRI frame data and Ethernet frame data in the related art is solved.

**Claims**

1. A data transmission method performed by a photoelectric conversion device, comprising:

    extracting (S102) data to be transmitted from a received Common Public Radio Interface, CPRI, frame;
    inserting (S104) the data to be transmitted into an Ethernet frame, a period of the Ethernet frame being the same as a period of the CPRI frame; and
    sending (S106) the Ethernet frame; **characterized in that** in a manner of setting packet sequence number control words for Ethernet frames, an Ethernet interface receiving the Ethernet frame inserted with the data to be transmitted parses the packet sequence number control words for the Ethernet frames to analyze a frame header position of the Ethernet frame, thereby implementing synchronous transmission of the CPRI frame data and the Ethernet frame data;
    wherein inserting the data to be transmitted into the Ethernet frame comprises:

        determining a data volume borne in each Ethernet frame according to a data transmission rate of an interface transmitting the Ethernet frame;
        judging whether the data volume borne in each Ethernet frame is smaller than a data volume of the data to be transmitted or not;
        under the condition of judging that the data volume borne in each Ethernet frame is smaller than the data volume of the data to be transmitted, inserting the data to be transmitted into multiple Ethernet frames, or screening data in a preset data volume from the data to be transmitted, inserting the data in the preset data volume into an Ethernet frame and discarding the other data, except the screened data in the preset data volume, in the data to be transmitted.

**2.** The method as claimed in claim 1, wherein the data volume borne in the Ethernet frame is determined according to the following formula:

$$X = \frac{P \times T}{8}$$

where P represents the data transmission rate of the interface transmitting the Ethernet frame and T represents the period of the Ethernet frame.

**3.** The method as claimed in any one of claims 1-2, before inserting the data to be transmitted into the Ethernet frame, further comprising:

judging whether to compress the data to be transmitted or not;
under the condition of judging to compress the data to be transmitted, compressing the data to be transmitted according to a preset compression algorithm and determining the compressed data to be transmitted as the data to be transmitted which is to be inserted into the Ethernet frame; or, under the condition of judging not to compress the data to be transmitted, transparently transmitting the data to be transmitted.

**4.** The method as claimed in any one of claims 1-2, wherein the Ethernet frame comprises a data transmission region and the data transmission region is configured to transmit the data to be transmitted.

**5.** The method as claimed in claim 4, wherein the Ethernet frame further comprises a control information transmission region and the control information transmission region is configured to transmit control information of the Ethernet frame.

**6.** A data transmission method performed by a photoelectric conversion device, comprising:

extracting (S202) data to be transmitted from a received Ethernet frame, a period of the Ethernet frame being the same as a period of a Common Public Radio Interface, CPRI, frame;
inserting (S204) the data to be transmitted into the CPRI frame; and sending (S206) the CPRI frame;
**characterized in that** in a manner of setting packet sequence number control words for Ethernet frames, an Ethernet interface receiving the Ethernet frame inserted with the data to be transmitted parses the packet sequence number control words for the Ethernet frames to analyze a frame header position of the Ethernet frame, thereby implementing synchronous transmission of the CPRI frame data and the Ethernet frame data;
wherein inserting the data to be transmitted into the CPRI frame comprises:

judging whether a data volume of the data to be transmitted is larger than a data volume borne in each CPRI frame or not;
under the condition of judging that the data volume of the data to be transmitted is larger than the data volume borne in each CPRI frame, inserting the data to be transmitted into multiple CPRI frames, or screening data in a preset data volume from the data to be transmitted, inserting the data in the preset data volume into a CPRI frame and discarding the other data, except the screened data in the preset data volume, in the data to be transmitted.

**7.** The method as claimed in claim 6, before inserting the data to be transmitted into the CPRI frame, further comprising:

judging whether to decompress the data to be transmitted or not;
under the condition of judging to decompress the data to be transmitted, decompressing the data to be transmitted according to a preset decompression algorithm and determining the decompressed data to be transmitted as the data to be transmitted which is to be inserted into the CPRI frame; or, under the condition of judging not to decompress the data to be transmitted, transparently transmitting the data to be transmitted.

**8.** A photoelectric conversion device, comprising a first processing chip (2002), a first interface (2004) and a second interface (2006), wherein

the first processing chip (2002) is connected between the first interface (2004) and the second interface;
the first interface (2004) is configured to receive a Common Public Radio Interface, CPRI, frame;
the first processing chip (2002) is configured to extract data to be transmitted from the received CPRI frame and insert the data to be transmitted into an Ethernet frame, a period of the Ethernet frame being the same as a period of the CPRI frame; and
the second interface (2006) is configured to send the Ethernet frame ;
**characterized in that** the second interface (2006) is configured to, in a manner of setting packet sequence number control words for Ethernet frames, parse the packet sequence number control words for the Ethernet frames to analyze a frame header position of the Ethernet frame, thereby implementing synchronous transmission of the CPRI frame data and the Ethernet frame data;

wherein the first processing chip is configured to:

determine a data volume borne in each Ethernet frame according to a data transmission rate of an interface transmitting the Ethernet frame;

judge whether the data volume borne in each Ethernet frame is smaller than a data volume of the data to be transmitted or not; under the condition of judging that the data volume borne in each Ethernet frame is smaller than the data volume of the data to be transmitted, insert the data to be transmitted into multiple Ethernet frames, or screen data in a preset data volume from the data to be transmitted, insert the data in the preset data volume into an Ethernet frame and discard the other data, except the screened data in the preset data volume, in the data to be transmitted.

9. A photoelectric conversion device, comprising a second processing chip (2102), a third interface (2104) and a fourth interface (2106), wherein

the second processing chip (2102) is connected between the third interface (2104) and the fourth interface (2106);

the third interface (2104) is configured to receive an Ethernet frame;

the second processing chip (2102) is configured to extract data to be transmitted from the Ethernet frame received by the third interface, a period of the Ethernet frame being the same as a period of a Common Public Radio Interface, CPRI, frame; and

the fourth interface (2106) is configured to send the CPRI frame;

**characterized in that** the third interface (2104) is configured to, in a manner of setting packet sequence number control words for Ethernet frames, parse the packet sequence number control words for the Ethernet frames to analyze a frame header position of the Ethernet frame, thereby implementing synchronous transmission of the CPRI frame data and the Ethernet frame data;

wherein the second processing chip is configured to:

judge whether a data volume of the data to be transmitted is larger than a data volume borne in each CPRI frame or not; under the condition of judging that the data volume of the data to be transmitted larger than the data volume borne in each CPRI frame, insert the data to be transmitted into multiple CPRI frames, or screen data in a preset data volume from the data to be transmitted, insert the data in the preset data volume into a CPRI frame and discard the other data, except the screened data in the preset data volume, in the data to be transmitted.

**Patentansprüche**

1. Datenübertragungsverfahren, das durch eine fotoelektrische Umwandlungsvorrichtung durchgeführt wird, das Folgendes umfasst:

Extrahieren (S102) von zu übertragenden Daten aus einem empfangenen CPRI(Common Public Radio Interface)-Rahmen;

Einfügen (S104) der zu übertragenden Daten in einen Ethernet-Rahmen, wobei eine Periode des Ethernet-Rahmens die gleiche wie eine Periode des CPRI-Rahmens ist; und

Senden (S106) des Ethernet-Rahmens;

**dadurch gekennzeichnet, dass**

in einer Art und Weise eines Einstellens von Paketfolgenummer-Steuerwörtern für Ethernet-Rahmen eine Ethernet-Schnittstelle, die den mit den zu übertragenden Daten eingefügten Ethernet-Rahmen empfängt, die Paketfolgenummer-Steuerwörter für die Ethernet-Rahmen parst, um eine Rahmenkopfposition des Ethernet-Rahmens zu analysieren, wodurch eine synchrone Übertragung der CPRI-Rahmendaten und der Ethernet-Rahmendaten implementiert wird;

wobei das Einfügen der zu übertragenden Daten in den Ethernet-Rahmen Folgendes umfasst:

Bestimmen eines Datenvolumens, das in jedem Ethernet-Rahmen getragen wird, gemäß einer Datenübertragungsrate einer Schnittstelle, die den Ethernet-Rahmen überträgt;

Beurteilen, ob das in jedem Ethernet-Rahmen getragene Datenvolumen kleiner als ein Datenvolumen der zu übertragenden Daten ist oder nicht;

unter der Bedingung, dass beurteilt wird, dass das in jedem Ethernet-Rahmen getragene Datenvolumen kleiner als das Datenvolumen der zu übertragenden Daten ist, Einfügen der zu übertragenden Daten in mehrere Ethernet-Rahmen oder Herausfiltern von Daten in einem voreingestellten Datenvolumen aus den zu übertragenden Daten, Einfügen der Daten in dem voreingestellten Datenvolumen in einen Ethernet-Rahmen und Verwerfen der anderen Daten mit Ausnahme der herausgefilterten Daten in dem voreingestellten Datenvolumen in den zu übertragenden Daten.

2. Verfahren nach Anspruch 1, wobei das in dem Ethernet-Rahmen getragene Datenvolumen nach der folgenden Formel bestimmt wird:

$$X = \frac{P \times T}{8}$$

wobei P die Datenübertragungsrate der Schnittstelle darstellt, die den Ethernet-Rahmen überträgt, und T die Periode des Ethernet-Rahmens darstellt.

3. Verfahren nach einem der Ansprüche 1-2, das vor dem Einfügen der zu übertragenden Daten in den Ethernet-Rahmen ferner Folgendes umfasst:

Beurteilen, ob die zu übertragenden Daten komprimiert werden sollen oder nicht; unter der Bedingung, dass beurteilt wird, die zu übertragenden Daten zu komprimieren, Komprimieren der zu übertragenden Daten gemäß einem voreingestellten Kompressionsalgorithmus und Bestimmen der komprimierten zu übertragenden Daten als die zu übertragenden Daten, die in den Ethernet-Rahmen eingefügt werden sollen; oder unter der Bedingung, dass beurteilt wird, die zu übertragenden Daten nicht zu komprimieren, transparentes Übertragen der zu übertragenden Daten.

4. Verfahren nach einem der Ansprüche 1-2, wobei der Ethernet-Rahmen einen Datenübertragungsbereich umfasst und der Datenübertragungsbereich konfiguriert ist, um die zu übertragenden Daten zu übertragen.

5. Verfahren nach Anspruch 4, wobei der Ethernet-Rahmen ferner einen Steuerinformationsübertragungsbereich umfasst und der Steuerinformationsübertragungsbereich konfiguriert ist, um Steuerinformationen des Ethernet-Rahmens zu übertragen.

6. Datenübertragungsverfahren, das durch eine fotoelektrische Umwandlungsvorrichtung durchgeführt wird, das Folgendes umfasst:

Extrahieren (S202) von zu übertragenden Daten aus einem empfangenen Ethernet-Rahmen, wobei eine Periode des Ethernet-Rahmens die gleiche wie eine Periode eines CPRI-Rahmens ist;

Einfügen (S204) der zu übertragenden Daten in den CPRI-Rahmen; und Senden (S206) des CPRI-Rahmens; **dadurch gekennzeichnet, dass** in einer Art und Weise des Einstellens von Paketfolgenummer-Steuerwörtern für Ethernet-Rahmen eine Ethernet-Schnittstelle, die den mit den zu übertragenden Daten eingefügten Ethernet-Rahmen empfängt, die Paketfolgenummer-Steuerwörter für die Ethernet-Rahmen parst, um eine Rahmenkopfposition des Ethernet-Rahmens zu analysieren, wodurch eine synchrone Übertragung der CPRI-Rahmendaten und der Ethernet-Rahmendaten implementiert wird; wobei das Einfügen der zu übertragenden Daten in den CPRI-Rahmen Folgendes umfasst:

Beurteilen, ob ein Datenvolumen der zu übertragenden Daten größer als ein Datenvolumen ist, das in jedem CPRI-Rahmen getragen wird oder nicht; unter der Bedingung, dass beurteilt wird, dass das Datenvolumen der zu übertragenden Daten größer als das in jedem CPRI-Rahmen getragene Datenvolumen ist, Einfügen der zu übertragenden Daten in mehrere CPRI-Rahmen oder Herausfiltern von Daten in einem voreingestellten Datenvolumen aus den zu übertragenden Daten, Einfügen der Daten in dem voreingestellten Datenvolumen in einen CPRI-Rahmen und Verwerfen der anderen Daten mit Ausnahme der herausgefilterten Daten in dem voreingestellten Datenvolumen in den zu übertragenden Daten.

7. Verfahren nach Anspruch 6, das vor dem Einfügen der zu übertragenden Daten in den CPRI-Rahmen ferner Folgendes umfasst:

Beurteilen, ob die zu übertragenden Daten dekomprimiert werden sollen oder nicht; unter der Bedingung, dass beurteilt wird, die zu übertragenden Daten zu dekomprimieren, Dekomprimieren der zu übertragenden Daten gemäß einem voreingestellten Dekompressionsalgorithmus und Bestimmen der dekomprimierten zu übertragenden Daten als die zu übertragenden Daten, die in den CPRI-Rahmen eingefügt werden sollen; oder unter der Bedingung, dass beurteilt wird, die zu übertragenden Daten nicht zu dekomprimieren, transparentes Übertragen der zu übertragenden Daten.

8. Fotoelektrische Umwandlungsvorrichtung, die einen ersten Verarbeitungschip (2002), eine erste Schnittstelle (2004) und eine zweite Schnittstelle (2006) umfasst, wobei

der erste Verarbeitungschip (2002) zwischen der ersten Schnittstelle (2004) und der zweiten Schnittstelle angeschlossen ist;

die erste Schnittstelle (2004) konfiguriert ist, um einen CPRI-Rahmen zu empfangen;

der erste Verarbeitungschip (2002) konfiguriert ist, um zu übertragende Daten aus dem empfangenen CPRI-Rahmen zu extrahieren und die zu übertragenden Daten in einen Ethernet-Rahmen einzufügen, wobei eine Periode des Ethernet-Rahmens die gleiche wie eine Periode des CPRI-Rahmens ist; und

die zweite Schnittstelle (2006) konfiguriert ist, um den Ethernet-Rahmen zu senden;

**dadurch gekennzeichnet, dass**

die zweite Schnittstelle (2006) konfiguriert ist, um in einer Art und Weise des Einstellens von Paketfolgenummer-Steuerwörtern für Ethernet-Rahmen die Paketfolgenummer-Steuerwörter für die Ethernet-Rahmen zu parsen, um eine Rahmenkopfposition des Ethernet-Rahmens zu analysieren, wodurch eine synchrone Übertragung der CPRI-Rahmendaten und der Ethernet-Rahmendaten implementiert wird;

wobei der erste Verarbeitungschip für Folgendes konfiguriert ist:

Bestimmen eines Datenvolumens, das in jedem Ethernet-Rahmen getragen wird, gemäß einer Datenübertragungsrate einer Schnittstelle, die den Ethernet-Rahmen überträgt;

Beurteilen, ob das in jedem Ethernet-Rahmen getragene Datenvolumen kleiner als ein Datenvolumen der zu übertragenden Daten ist oder nicht;

unter der Bedingung, dass beurteilt wird, dass das in jedem Ethernet-Rahmen getragene Datenvolumen kleiner als das Datenvolumen der zu übertragenden Daten ist, Einfügen der zu übertragenden Daten in mehrere Ethernet-Rahmen oder Herausfiltern von Daten in einem voreingestellten Datenvolumen aus den zu übertragenden Daten, Einfügen der Daten in dem voreingestellten Datenvolumen in einen Ethernet-Rahmen und Verwerfen der anderen Daten mit Ausnahme der herausgefilterten Daten in dem voreingestellten Datenvolumen in den zu übertragenden Daten.

9. Fotoelektrische Umwandlungsvorrichtung, die einen zweiten Verarbeitungschip (2102), eine dritte Schnittstelle (2104) und eine vierte Schnittstelle (2106) umfasst, wobei

der zweite Verarbeitungschip (2102) zwischen der dritten Schnittstelle (2104) und der vierten Schnittstelle (2106) angeschlossen ist;

die dritte Schnittstelle (2104) konfiguriert ist, um einen Ethernet-Rahmen zu empfangen;

der zweite Verarbeitungschip (2102) konfiguriert ist, um zu übertragende Daten aus dem Ethernet-Rahmen zu extrahieren, der durch die dritte Schnittstelle empfangen wird, wobei eine Periode des Ethernet-Rahmens die gleiche wie eine Periode eines CPRI-Rahmens ist; und

die vierte Schnittstelle (2106) konfiguriert ist, um den CPRI-Rahmen zu senden;

**dadurch gekennzeichnet, dass**

die dritte Schnittstelle (2104) konfiguriert ist, um in einer Art und Weise des Einstellens von Paketfolgenummer-Steuerwörtern für Ethernet-Rahmen die Paketfolgenummer-Steuerwörter für die Ethernet-Rahmen zu parsen, um eine Rahmenkopfposition des Ethernet-Rahmens zu analysieren, wodurch eine synchrone Übertragung der CPRI-Rahmendaten und der Ethernet-Rahmendaten implementiert wird;

wobei der zweite Verarbeitungschip für Folgendes konfiguriert ist:

Beurteilen, ob ein Datenvolumen der zu übertragenden Daten größer als ein Datenvolumen ist, das in jedem CPRI-Rahmen getragen wird oder nicht;

unter der Bedingung, dass beurteilt wird, dass das Datenvolumen der zu übertragenden Daten größer als das in jedem CPRI-Rahmen getragene Datenvolumen ist, Einfügen der zu übertragenden Daten in mehrere CPRI-Rahmen oder Herausfiltern von Daten in einem voreingestellten Datenvolumen aus den zu übertragenden Daten, Einfügen der Daten in dem voreingestellten Datenvolumen in einen CPRI-Rahmen und Verwerfen der anderen Daten mit Ausnahme der herausgefilterten Daten in dem voreingestellten Datenvolumen in den zu übertragenden Daten.

## Revendications

1. Procédé de transmission de données exécuté par un dispositif de conversion photoélectrique, comprenant :

l'extraction (S102) de données à transmettre à partir d'une trame d'interface radio publique commune, CPRI, reçue ;

l'insertion (S104) des données à transmettre dans une trame Ethernet, une période de la trame Ethernet étant la même qu'une période de la trame CPRI ; et
l'envoi (S106) de la trame Ethernet ;
**caractérisé en ce que**
dans le but de définir des mots de commande de numéro de séquence de paquet pour des trames Ethernet, une interface Ethernet recevant la trame Ethernet insérée avec les données à transmettre analyse les mots de commande de numéro de séquence de paquet pour les trames Ethernet afin d'analyser une position d'en-tête de trame de la trame Ethernet, mettant ainsi en œuvre une transmission synchrone des données de la trame CPRI et des données de la trame Ethernet ;
dans lequel l'insertion des données à transmettre dans la trame Ethernet comprend :

la détermination d'un volume de données supporté dans chaque trame Ethernet selon un débit de transmission de données d'une interface transmettant la trame Ethernet ;
la décision du fait de savoir si le volume de données supporté dans chaque trame Ethernet est plus petit qu'un volume de données des données à transmettre ou non ;
sous réserve de la décision que le volume de données supporté dans chaque trame Ethernet est inférieur au volume de données des données à transmettre, l'insertion des données à transmettre dans plusieurs trames Ethernet ou le filtrage des données dans un volume de données prédéfini à partir des données à transmettre, l'insertion des données dans le volume de données prédéfini dans une trame Ethernet et l'élimination des autres données, à l'exception des données filtrées dans le volume de données prédéfini, dans les données à transmettre.

2. Procédé selon la revendication 1, dans lequel le volume de données supporté dans la trame Ethernet est déterminé selon la formule suivante :

$$X = \frac{PXT}{8}$$

où P représente le débit de transmission de données de l'interface transmettant la trame Ethernet et T représente la période de la trame Ethernet.

3. Procédé selon l'une quelconque des revendications 1 à 2, avant d'insérer les données à transmettre dans la trame Ethernet, comprenant en outre :

la décision du fait de savoir s'il faut compresser les données à transmettre ou non ;
sous réserve de la décision de compresser les données à transmettre, le fait de compresser les données à transmettre selon un algorithme de compression prédéfini et la détermination des données compressées à transmettre comme données à transmettre qui doivent être insérées dans la trame Ethernet ; ou, sous réserve de la décision de ne pas compresser les données à transmettre, la transmission de manière transparente des données à transmettre.

4. Procédé selon l'une quelconque des revendications 1 à 2, dans lequel la trame Ethernet comprend une région de transmission de données et la région de transmission de données est configurée pour transmettre les données à transmettre.

5. Procédé selon la revendication 4, dans lequel la trame Ethernet comprend en outre une région de transmission d'informations de commande et la région de transmission d'informations de commande est configurée pour transmettre des informations de commande de la trame Ethernet.

6. Procédé de transmission de données effectué par un dispositif de conversion photoélectrique, comprenant :

l'extraction (S202) de données à transmettre à partir d'une trame Ethernet reçue, une période de la trame Ethernet étant la même qu'une période d'une trame d'interface radio publique commune, CPRI ;
l'insertion (S204) des données à transmettre dans la trame CPRI ; et
l'envoi (S206) de la trame CPRI ;
**caractérisé en ce que**
dans le but de définir des mots de commande de numéro de séquence de paquet pour des trames Ethernet, une interface Ethernet recevant la trame Ethernet insérée avec les données à transmettre analyse les mots de commande de numéro de séquence de paquet pour les trames Ethernet afin d'analyser une position d'en-tête de trame de la trame Ethernet, mettant ainsi en œuvre une transmission synchrone des données de la trame CPRI et des données de la trame Ethernet ;
dans lequel l'insertion des données à transmettre dans la trame CPRI comprend :

la décision du fait de savoir si un volume de données des données à transmettre est plus grand qu'un volume de données supporté dans chaque trame CPRI ou non ;
sous réserve de la décision que le volume de données des données à transmettre est plus grand que le volume de données porté dans chaque trame CPRI, l'insertion des données à transmettre dans plusieurs trames CPRI, ou le filtrage des données dans un volume de données prédéfini à partir des données à transmettre, l'insertion des données dans le volume de données prédéfini dans une trame CPRI et l'élimination des autres données, à l'exception des données filtrées dans le volume de données prédéfini, dans les données à transmettre.

7. Procédé selon la revendication 6, avant d'insérer les données à transmettre dans la trame CPRI, comprenant en outre :

la décision du fait de savoir s'il faut décompresser les données à transmettre ou non ; sous réserve de la décision de décompresser les données à transmettre, le fait de décompresser les données à transmettre selon un algorithme de décompression prédéfini et la détermination des données décompressées à transmettre comme données à transmettre qui doivent être insérées dans la trame CPRI ; ou, sous réserve de la décision de ne pas décompresser les données à transmettre, la transmission de manière transparente des données à transmettre.

8. Dispositif de conversion photoélectrique, comprenant une première puce de traitement (2002), une première interface (2004) et une deuxième interface (2006), dans lequel la première puce de traitement (2002) est connectée entre la première interface (2004) et la deuxième interface ;

la première interface (2004) est configurée pour recevoir une trame d'interface radio publique commune, CPRI ; la première puce de traitement (2002) est configurée pour extraire les données à transmettre de la trame CPRI reçue et insérer les données à transmettre dans une trame Ethernet, une période de la trame Ethernet étant la même qu'une période de la trame CPRI ; et la deuxième interface (2006) est configurée pour envoyer la trame Ethernet ; **caractérisé en ce que** la deuxième interface (2006) est configurée pour, dans le but de définir des mots de commande de numéro de séquence de paquet pour les trames Ethernet, analyser les mots de commande de numéro de séquence de paquet pour les trames Ethernet afin d'analyser une position d'en-tête de trame de la trame Ethernet, mettant ainsi en œuvre une transmission synchrone des données de trame CPRI et des données de trame Ethernet ; dans lequel la première puce de traitement est configurée pour :

déterminer un volume de données transporté dans chaque trame Ethernet selon un débit de transmission de données d'une interface transmettant la trame Ethernet ; décider si le volume de données supporté dans chaque trame Ethernet est plus petit qu'un volume de données des données à transmettre ou non ; sous réserve de la décision que le volume de données supporté dans chaque trame Ethernet est inférieur au volume de données des données à transmettre, insérer les données à transmettre dans plusieurs trames Ethernet ou filtrer les données dans un volume de données prédéfini à partir des données à transmettre, insérer les données dans le volume de données prédéfini dans une trame Ethernet et éliminer les autres données, à l'exception des données filtrées dans le volume de données prédéfini, dans les données à transmettre.

9. Dispositif de conversion photoélectrique, comprenant une seconde puce de traitement (2102), une troisième interface (2104) et une quatrième interface (2106), dans lequel la seconde puce de traitement (2102) est connectée entre la troisième interface (2104) et la quatrième interface (2106) ;

la troisième interface (2104) est configurée pour recevoir une trame Ethernet ; la seconde puce de traitement (2102) est configurée pour extraire des données à transmettre de la trame Ethernet reçue par la troisième interface, une période de la trame Ethernet étant la même qu'une période d'une trame d'interface radio publique commune, CPRI ; et la quatrième interface (2106) est configurée pour envoyer la trame CPRI ; **caractérisé en ce que** la troisième interface (2104) est configurée pour, dans le but de définir des mots de commande de numéro de séquence de paquet pour les trames Ethernet, analyser les mots de commande de numéro de séquence de paquet pour les trames Ethernet afin d'analyser une position d'en-tête de trame de la trame Ethernet, mettant ainsi en œuvre une transmission synchrone des données de trame CPRI et des données de trame Ethernet ; dans lequel la seconde puce de traitement est configurée pour :

décider si un volume de données des données à transmettre est plus grand qu'un volume de données porté dans chaque trame CPRI ou non ; sous réserve que le volume de données des données à transmettre est supérieur au volume de données supporté dans chaque trame CPRI, insérer les données à transmettre dans plusieurs trames CPRI, ou filtrer les données dans un volume de données prédéfini à partir des données à transmettre, insérer les données dans le volume de données prédéfini dans une trame CPRI et éliminer les autres données, à l'exception des données filtrées dans le volume de données prédéfini, dans les données à transmettre.

Data to be transmitted is extracted from a received CPRI frame — S102

The data to be transmitted is inserted into an Ethernet frame, a period of the Ethernet frame being the same as a period of the CPRI frame — S104

The Ethernet frame is sent — S106

**Fig. 1**

Data to be transmitted is extracted from a received Ethernet frame, a period of the Ethernet frame being the same as a period of a CPRI frame — S202

The data to be transmitted is inserted into the CPRI frame — S204

The CPRI frame is sent — S206

**Fig. 2**

First extraction module ——— 32

First insertion module ——— 34

First sending module ——— 36

**Fig. 3**

First extraction module ——— 32

First insertion module ——— 34

402 ——— First acquisition unit    First determination unit ——— 404

Second determination unit ——— 406

First allocation unit ——— 408

First insertion unit ——— 410

First sending module ——— 36

**Fig. 4**

| First extraction module | 32 |
| --- | --- |

| First insertion module | 34 |
| --- | --- |

Third determination unit — 52

First judgment unit — 54

First processing unit — 56

Second processing unit — 58

| First sending module | 36 |
| --- | --- |

**Fig. 5**

| First extraction module | 32 |
| --- | --- |

| First judgment module | 62 |
| --- | --- |

| Compression module | 64 |
| --- | --- |

| First insertion module | 34 |
| --- | --- |

| First sending module | 36 |
| --- | --- |

**Fig. 6**

Second extraction module ———— 72

Second insertion module ———— 74

Second sending module ———— 76

**Fig. 7**

Second extraction module ———— 72

Second acquisition unit ———— 82

Extraction unit ———— 84

Second insertion module ———— 74

Second sending module ———— 76

**Fig. 8**

Second extraction module — 72

Second insertion module — 74

Second allocation unit — 92

Second insertion unit — 94

Second sending module — 76

**Fig. 9**

Second extraction module — 72

Second insertion module — 74

Second judgment unit — 102

104 — Third processing unit

Fourth processing unit — 106

Second sending module — 76

**Fig. 10**

Second extraction module — 72

Second judgment module — 112

Decompression module — 114

Second insertion module — 74

Second sending module — 76

**Fig. 11**

S1202 — Data from a CPRI is received

S1204 — Whether to perform compression processing on the data

S1206 — The corresponding related data is inserted into electrical interface basic frames according to a defined 10ms electrical interface frame format and packet sequence numbers within 10ms in the basic frames are cyclically counted

S1208 — An opposite end searches received messages, may determine a starting position of the 10ms frame after finding the message of which the packet sequence number is 0, then may parse subsequent corresponding messages according to the electrical interface frame format and extracts the corresponding data

S1212 — The corresponding related data is inserted into the electrical interface basic frames according to the defined 10ms electrical interface frame format and the packet sequence numbers within 10ms in the basic frames are cyclically counted

S1214 — The opposite end may search the received messages, may determine the starting position of the 10ms electrical interface frame when finding the message of which the packet sequence number is 0, then may parse the subsequent corresponding messages according to the electrical interface frame format and extracts the corresponding data

S1216 — Whether to perform decompression processing on the data

S1218 — The data is inserted into a CPRI frame according to a definition about a CPRI frame structure

**Fig. 12**

**Fig. 13**

**Fig. 14**

**Fig. 15**

**Fig. 16**

**Fig. 17**

B B U — Photoelectric conversion device — O — RRU

____O____ Optical fiber          _____ Unshielded twisted pair

**Fig. 18**

B B U — Photoelectric conversion device — O — RRU ⋮ O — RRU

____O____ Optical fiber          _____ Unshielded twisted pair

**Fig. 19**

2004    2002    2006

First interface — First processing chip — Second interface

Photoelectric conversion device

**Fig. 20**

2104         2102         2106

| Third interface | Second processing chip | Fourth interface |

Photoelectric conversion device

**Fig. 21**

2204-1

| First device | | Optical interface | Processing chip | Electrical interface | | Second device |

Photoelectric conversion device

2202     2204-2  2204         2204-3     2206

**Fig. 22**

## REFERENCES CITED IN THE DESCRIPTION

**Patent documents cited in the description**

- EP 2908600 A